(19) **Europäisches Patentamt European Patent Office Office européen des brevets**

(11) **EP 4 712 269 A1**

(12) **EUROPEAN PATENT APPLICATION**
published in accordance with Art. 153(4) EPC

(43) Date of publication:
**18.03.2026 Bulletin 2026/12**

(21) Application number: **24803460.5**

(22) Date of filing: **07.05.2024**

(51) International Patent Classification (IPC):
**H01Q 21/06** (2006.01)   **H02J 50/20** (2016.01)

(52) Cooperative Patent Classification (CPC):
**H01Q 1/42; H01Q 9/16; H01Q 9/42; H01Q 9/44;**
**H01Q 13/10; H01Q 13/16; H01Q 21/06;**
**H01Q 21/28; H02J 50/12; H02J 50/20; H02J 50/40**

(86) International application number:
**PCT/JP2024/016926**

(87) International publication number:
**WO 2024/232349 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023 JP 2023078740**

(71) Applicant: **Aeterlink Corp.**
**Tokyo 100-0005 (JP)**

(72) Inventors:
• **TANABE Yuji**
**Tokyo 100-0005 (JP)**
• **KUMAGAI Ryosuke**
**Tokyo 100-0005 (JP)**
• **KODATE Naoto**
**Tokyo 100-0005 (JP)**

(74) Representative: **Zimmermann & Partner**
**Patentanwälte mbB**
**P.O. Box 330 920**
**80069 München (DE)**

(54) **MULTI-ANTENNA AND POWER RECEIVING DEVICE**

(57)    This multi-antenna comprises: a substrate; a first antenna element composed of two linear antennas extending from a first feeding point in two different directions, and a second antenna element composed of two linear antennas extending from a second feeding point in two different directions, the first and second antenna elements being arranged to surround one area of the substrate; and a connecting line connecting the first feeding point of the first antenna element and the second feeding point of the second antenna element. The connecting line is connected to the first feeding point of the first antenna element without extending along the bisector of the interior angle formed by the two linear antennas with the first feeding point of the first antenna element at the apex. The connecting line is connected to the second feeding point of the second antenna element without extending along the bisector of the interior angle formed by the two linear antennas with the second feeding point of the second antenna element at the apex.

*FIG. 8*

## Description

TECHNICAL FIELD

The present invention relates to a multi-antenna and a power receiving device.

BACKGROUND ART

In recent years, wireless power transfer (WPT) has been used in various fields. By utilizing WPT, problems such as wiring load, breakage, and maintenance can be avoided as compared with the case of wired power transfer.

In general, a linear antenna such as a dipole antenna is used at a power receiving device side of WPT to receive transmitted energy. In general, when one linear antenna is used, it is difficult to secure a sufficient amount of power reception and directivity, and thus a plurality of linear antennas or multi-antennas are used.

When a multi-antenna is used, it is necessary to optimize the number of antennas, a distance between the antennas, an orientation, connection, and the like. This is because otherwise, electromagnetic coupling or the like may occur and the power reception efficiency may decrease. The optimum combination greatly depends on the environment.

As a background art of the present technical field, there is JP2010-41566A (Patent Literature 1). Patent Literature 1 discloses an example in which two dipole antennas intersect each other in a cross shape.

As a background art of the present technical field, there is WO2018/096740A (Patent Literature 2). Patent Literature 2 discloses an example in which two dipole antennas intersect each other in a cross shape, each end side is formed in an arrow shape, and further the form thereof is repeated in a vertical direction and a horizontal direction.

CITATION LIST

PATENT LITERATURE

Patent Literature 1: JP2010-41566A
Patent Literature 2: WO2018/096740A

SUMMARY OF INVENTION

TECHNICAL PROBLEM

The present invention provides a multi-antenna with low manufacturing cost and excellent reception performance.

SOLUTION TO PROBLEM

A multi-antenna including: a substrate; a first antenna element including two linear antennas extending in two different directions from a first feeding point, and a second antenna element including two linear antennas extending in two different directions from a second feeding point, the first antenna element and the second antenna element being arranged to surround one region of the substrate; and a connection line configured to connect the first feeding point of the first antenna element and the second feeding point of the second antenna element, in which the connection line is connected to the first feeding point of the first antenna element without extending along a bisector of an interior angle formed by the two linear antennas with the first feeding point of the first antenna element as an apex, and the connection line is connected to the second feeding point of the second antenna element without extending along a bisector of an interior angle formed by the two linear antennas with the second feeding point of the second antenna element as an apex.

ADVANTAGEOUS EFFECTS OF INVENTION

The present invention provides a multi-antenna with low manufacturing cost and excellent reception performance.

BRIEF DESCRIPTION OF DRAWINGS

[FIG. 1] FIG. 1 illustrates an overall configuration of a WPT system.
[FIG. 2] FIG. 2 is a block diagram illustrating a configuration example of a power transmission device and a power receiving device.
[FIG. 3] FIG. 3 is a top view and a side view of a main body of a power receiving device 1, 2.
[FIG. 4] FIG. 4 is a top view of a substrate 10 incorporated in the main body of the power receiving device 1.
[FIG. 5] FIG. 5 is a perspective view of a single multi-antenna arranged on FPC.
[FIG. 6] FIG. 6 is a diagram illustrating a configuration according to a first embodiment of a multi-antenna (first example).
[FIG. 7] FIG. 7 is a diagram illustrating a configuration according to a second embodiment of the multi-antenna (first example).
[FIG. 8] FIG. 8 is a diagram illustrating a configuration according to a third embodiment of the multi-antenna (first example).
[FIG. 9] FIG. 9 is a diagram illustrating a configuration according to a fourth embodiment of the multi-antenna (first example).
[FIG. 10] FIG. 10 is a diagram illustrating a configuration according to a fifth embodiment of the multi-antenna (first example).

[FIG. 11] FIG. 11 is a diagram illustrating a configuration according to a sixth embodiment of the multi-antenna (first example).

[FIG. 12] FIG. 12 is a diagram illustrating a configuration according to a seventh embodiment of the multi-antenna (first example).

[FIG. 13] FIG. 13 is a diagram illustrating a configuration according to an eighth embodiment of the multi-antenna (first example).

[FIG. 14] FIG. 14 is a plan view illustrating a plurality of combinations of the multi-antenna (first example).

[FIG. 15] FIG. 15 is a diagram illustrating a configuration according to a modification of the multi-antenna (first example).

[FIG. 16] FIG. 16 is a diagram illustrating a configuration according to a first embodiment of a multi-antenna (second example).

[FIG. 17] FIG. 17 is a diagram illustrating a configuration according to a second embodiment of the multi-antenna (second example).

[FIG. 18] FIG. 18 is a diagram illustrating a configuration according to a third embodiment of the multi-antenna (second example).

[FIG. 19] FIG. 19 is a plan view illustrating a plurality of combinations of the multi-antenna (second example).

[FIG. 20] FIG. 20 is a diagram illustrating a configuration according to a modification of the multi-antenna (second example).

[FIG. 21] FIG. 21 is a diagram illustrating a configuration according to a first embodiment of a multi-antenna (third example).

[FIG. 22] FIG. 22 is a diagram illustrating a configuration according to a second embodiment of the multi-antenna (third example).

[FIG. 23] FIG. 23 is a diagram illustrating a configuration according to the second embodiment of the multi-antenna (third example).

[FIG. 24] FIG. 24 is a diagram illustrating a configuration according to the second embodiment of the multi-antenna (third example).

[FIG. 25] FIG. 25 is a side view of a main body of the power receiving device 1, 2 including the multi-antenna (third example).

[FIG. 26] FIG. 26 is a top view, a side view, and a perspective view of a main body of the power receiving device 1, 2 (fourth example).

[FIG. 27] FIG. 27 is a top view, a side view, and a perspective view of a main body of the power receiving device 1, 2 (fifth example).

[FIG. 28] FIG. 28 is a diagram illustrating a configuration according to a first embodiment of a multi-antenna (sixth example).

[FIG. 29] FIG. 29 illustrates a connection relation among an antenna element, a connection line, and a rectifier.

[FIG. 30] FIG. 30 is a diagram illustrating a configuration of an interface substrate (seventh example) and a diagram illustrating an application example of the interface substrate to a multi-antenna including a plurality of linear antennas.

[FIG. 31] FIG. 31 is an example of a diagram illustrated in a table for comparison of substrates to which a multi-antenna is applicable.

[FIG. 32] FIG. 32 is an example in which radiation efficiencies of various multi-antennas are indicated by (1) to (3).

[FIG. 33] FIG. 33 is a diagram schematically illustrating an example in which a power receiving device is applied in a building management region and a usage form of the power receiving device.

## DESCRIPTION OF EMBODIMENTS

Hereinafter, embodiments of the present invention will be described with reference to the drawings. The embodiments described below are merely examples of embodiments used to describe the present invention. It should be understood that the contents of the present invention should not be interpreted as being limited based on the following description.

In recent years, wireless power transmission or wireless power transfer (WPT) has been used to transmit energy to PCs, sensors, actuators, robots, devices, and the like in various fields.

For example, in WPT, energy is transmitted between a power transmission device and a power receiving device using a microwave.

Generally, in the power receiving device, a linear antenna such as a dipole antenna is used to receive energy transmitted from the power transmission device.

In order to efficiently transmit and receive energy based on WPT, it is necessary to consider various problems. For example, on a power transmission device side, it is necessary to consider physical restrictions such as attenuation of a radio wave during power transmission in a free space. In addition, it is necessary to consider legal restrictions such as an upper limit of the transmitted power being restricted to 1 W.

On the other hand, such legal restrictions are relaxed on a power receiving device side. However, there are unique problems as described below on the power receiving device side.

"Electrical Problem"

In a case where energy is received using one antenna, it may be difficult to obtain a sufficient amount of received power and directivity for operating a sensor or the like. On the other hand, when a multi-antenna is used, it is necessary to optimize the number of antennas, a distance between the antennas, an orientation, connection, and the like. This is because otherwise, the power reception efficiency of the multi-antenna decreases.

"Physical Problem"

In order to arrange and hold a multi-antenna in a power receiving device, the arrangement may be optimized using a housing. However, when a flexible substrate is used as a material of the housing, there is a physical problem that the flexible substrate is weak against heat and strong stress. Therefore, it is necessary to prevent the arrangement of the multi-antenna from being damaged due to the heat and the strong stress.

"Environmental Problem"

When a multi-antenna is exposed or projected in a surrounding environment, an appearance may be impaired. Generally, there is a trade-off relation between an amount of reception power of the multi-antenna (optimum arrangement of plurality of antennas in large area region) and the appearance (human being not aware of antenna). Therefore, it is preferable to fuse the surrounding environment and the multi-antenna so as not to be unnatural.

"Manufacturing Problem"

Generally, a multi-antenna having a small component mounting area and a large substrate area tends to increase its manufacturing cost. In addition, when linear antennas or the like used for the multi-antenna cannot be uniformly applied, the efficiency of mass production may be impaired. Therefore, it is preferable to implement the multi-antenna so as to reduce the burden in manufacturing.

"Legal Problem"

As described above, upper limits may be determined for transmission power and a transmission antenna gain. However, strict restrictions are not imposed on a power receiving device side, and an upper limit may not be determined for the number of receiving antennas. However, it is preferable to improve the efficiency of power reception between a power transmission device and a power receiving device after understanding the problem on a transmission side.

"Problem of Building Management Area"

When a power receiving device is used in a building management area (comprehensive management related to management of buildings such as office buildings and commercial facilities), a size of a receiving antenna is less likely to be relatively restricted. However, since a distance between a power transmission device and the power receiving device tends to be relatively long, it is required to increase the efficiency of power reception. In addition, it is further required to dissolve an antenna for power reception into the surrounding environ-

onment.

In view of these various viewpoints, the present applicant has devised a multi-antenna to be used in a power receiving device of WPT so as to obtain suitable performance (first to sixth examples). Further, the present applicant provides an interface substrate for assisting arrangement and connection of linear antennas (seventh example).

Generally, an antenna in which a plurality of elements are arranged is called an array antenna. Elements having the same shape and size are normally arranged in the array antenna. Desired characteristics such as a power reception amount and directivity can be designed depending on the number of elements, the installation method, and the like.

Generally, the array antenna is strongly radiated in a specific direction. An intensity of the received radio wave decreases substantially in inverse proportion to the distance.

In addition, generally, in the array antenna, a length of the element is adjusted such that a phase difference of a current is eliminated as much as possible and a uniform and strong current flows.

The element is implemented as, for example, a linear antenna such as a dipole antenna implemented using a copper wire or the like.

Generally, a dipole antenna can be simplified to one wire. The dipole antenna is a balanced circuit having the same length in a left-right direction and having the same magnitude of current flowing in the left-right direction.

In addition, generally, when a length of the dipole antenna is approximately half a wavelength, a resonance phenomenon occurs and the strongest current flows.

Generally, the dipole antenna is also called a 1/2 λ (half wavelength) dipole antenna, and a length d thereof can be obtained as follows based on an operating frequency f (Hz).

$$d = 3 \times 108/2f \text{ (m)}$$

However, a calculation formula for obtaining d is not limited to the above formula. For example, in order to eliminate inductive reactance, the length of the element may be reduced within a range of 96% to 97%.

$$d = \{3 \times 108/2f\} \times (0.96 \text{ to } 0.97) \text{ (m)}$$

In this way, the dipole antenna is designed as an electric field detection antenna based on a wavelength of the operating frequency as a resonance antenna. However, when provided on a substrate of an electric circuit, a wavelength shortening rate may differ depending on a thickness and dielectric constant of a dielectric layer of the substrate. Further, it is possible to modify the equation for obtaining d depending on the arrangement method of the dipole antenna.

The multi-antenna according to the present example basically follows the design concept of an array antenna, and the arrangement and connection method of elements are particularly devised.

By applying the multi-antenna according to the present example, it is possible to secure a sufficient power reception amount and directivity for operating a sensor and the like. At this time, the linear antennas are efficiently connected, and occurrence of problems such as electromagnetic coupling due to a distance between the linear antennas, an orientation, connection, and the like is prevented.

It is devised to arrange a plurality of the basic aspects, thereby ensuring a sufficient power reception amount and directivity, and improving radiation efficiency.

Further, it is devised that when the multi-antenna is connected by a DC output connector or a DC connection line (hereinafter, simply referred to as connection line), the connection line is arranged along a bisector of an interior angle formed by two adjacent linear antennas, so that the antenna is not adversely affected.

The DC connection line does not necessarily have to be arranged along the bisector of the interior angle formed by two adjacent linear antennas. The DC connection line may be arranged to be connected to the two linear antennas without extending along the bisector of the interior angle formed by the two linear antennas.

Further, it is devised to use an interface substrate, so that it is possible to efficiently arrange and connect the connection line and the linear antennas constituting the multi-antenna.

<Basic Configuration of WPT System>

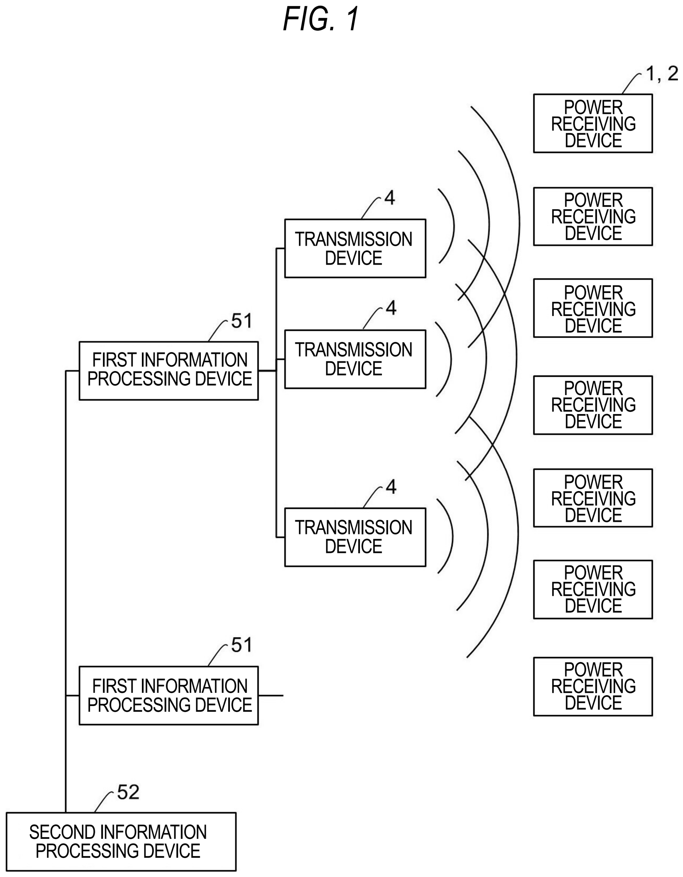

FIG. 1 is a diagram illustrating an overall configuration of a WPT system according to the present embodiment.

The WPT system illustrated in FIG. 1 includes, for example, power transmission devices 4, power receiving devices 1, 2, first information processing devices 61, and a second information processing device 62. The WPT system illustrated in FIG. 1 is used in, for example, a building or a factory. Connection between the power transmission device 4 and the first information processing device 61 and connection between the first information processing device 61 and the second information processing device 62 may be wired or wireless.

FIG. 1 illustrates an example in which the WPT system includes three power transmission devices 4, and the number of power transmission devices 4 included in the WPT system is not limited to three. The number of power transmission devices 4 included in the WPT system may be two or less, or four or more.

FIG. 1 illustrates an example in which the WPT system includes seven power receiving devices 1, 2, and the number of power receiving devices 1, 2 included in the WPT system is not limited to seven. The number of the power receiving devices 1, 2 included in the WPT system may be six or less, or eight or more.

FIG. 1 illustrates an example in which the WPT system includes two first information processing devices 61, and the number of the first information processing devices 61 included in the WPT system is not limited to two. The number of the first information processing devices 61 included in the WPT system may be one or three or more.

The power transmission device 4 is configured to transmit, for example, a feeding signal or a data signal to the power receiving device 1, 2. The power transmission device 4 is configured to transmit a feeding signal to the power receiving device 1, 2, using a radio wave in a 920 MHz band, for example. The power transmission device 4 is configured to transmit a data signal to the power receiving device 1, 2, using a radio wave in a 2.4 GHz band, for example. The power transmission device 4 may be configured to transmit a data signal using a radio wave in the 920 MHz band.

For example, the power transmission device 4 may be configured to transmit a feeding signal to a power receiving device 1, 2, or may be configured to transmit a feeding signal to the plurality of power receiving devices 1, 2. For example, the power transmission device 4 may be configured to transmit a data signal to a power receiving device 1, 2, or may be configured to transmit a data signal to the plurality of power receiving devices 1, 2. For example, the power transmission device 4 may be configured to transmit the same data signal as other power transmission devices 4, or may be configured to transmit a different data signal from other power transmission devices 4. For example, the power transmission device 4 may be configured to transmit a predetermined command signal as the data signal to the power receiving device 1, 2, or may be configured to transmit a preset signal as the data signal to the power receiving device 1, 2.

The power transmission device 4 is configured to receive, for example, a data signal transmitted from the power receiving device 1, 2. For example, the power transmission device 4 may be configured to receive a data signal transmitted from a power receiving device 1, 2, or may be configured to receive data signals transmitted from the plurality of power receiving devices 1, 2. The power transmission device 4 is configured to transmit the data signal transmitted from the power receiving device 1, 2 to the first information processing device 61. The power transmission device 4 is configured to transmit information on a state of the power transmission device 4 to the first information processing device 61.

The power receiving device 1, 2 is configured to receive, for example, a feeding signal or a data signal transmitted from the power transmission device 4. For example, in a case where the power receiving device 1, 2 includes a power storage unit, the power receiving device 1, 2 is configured to convert the feeding signal transmitted from the power transmission device 4 into power and is configured to store the converted power in the power storage unit. For example, in a case where the power receiving device 1, 2 includes a predetermined sensor, the power receiving device 1, 2 is configured to convert the feeding signal transmitted from the power transmission device 4 into power and is configured to drive the sensor with the converted power. A battery, a capacitor, or the like can be used as the power storage unit.

The power receiving device 1, 2 is configured to transmit, for example, information on a state of the power receiving device 1, 2 or information on a measurement result by the sensor to the power transmission device 4 as the data signal.

The first information processing device 61 is an information processing device configured to monitor operations of the power transmission device 4 and the power receiving device 1, 2 accommodated in the WPT system. For example, the first information processing device 61 is configured to determine whether the power transmission device 4 or the power receiving device 1, 2 is in a preset state, based on the information on the states of the power transmission device 4 and the power receiving device 1, 2 transmitted from the power transmission device 4. In a case where it is determined to be in the preset state, the first information processing device 61 transmits predetermined information to the second information processing device 62.

In addition, the first information processing device 61 is configured to accumulate information on the power transmission device 4 and the power receiving device 1, 2 accommodated in the WPT system. For example, the first information processing device 61 is configured to store, in a storage unit provided in the first information processing device 61, the information on the states related to the power transmission device 4 and the power receiving device 1, 2 transmitted from the power transmission device 4.

In addition, the first information processing device 61 is configured to control an operation of the power transmission device 4 accommodated in the WPT system.

In addition, the first information processing device 61 is configured to control the operation of the power transmission device 4 accommodated in the WPT system. For example, the first information processing device 61 is configured to transmit a predetermined instruction or information to the power transmission device 4.

In addition, the first information processing device 61 is configured to control an operation of the second information processing device 62.

The second information processing device 62 is an information processing device operated by an administrator of the WPT system. In a case where the second information processing device 62 receives, from the first information processing device 61, notification indicating that the power transmission device 4, the power receiving device 1, 2, or both of the power transmission device 4 and the power receiving device 1, 2 accommodated in the WPT system is in a predetermined state, the second information processing device 62 presents to a user that the power transmission device 4, the power receiving device 1, 2, or both of the power transmission device 4 and the power receiving device 1, 2 is in the predetermined state.

In addition, the second information processing device 62 is configured to analyze the information on the states of the power transmission device 4 and the power receiving device 1, 2 accumulated in the first information processing device 61, and is configured to present predetermined information to the user. The predetermined information is, for example, as follows.

·Information on arrangement of power transmission device 4
·Information on arrangement of power receiving device 1, 2
·Information on power consumption
·Information on power intensity

<Basic Configuration of Power Transmission Device and Power Receiving Device>

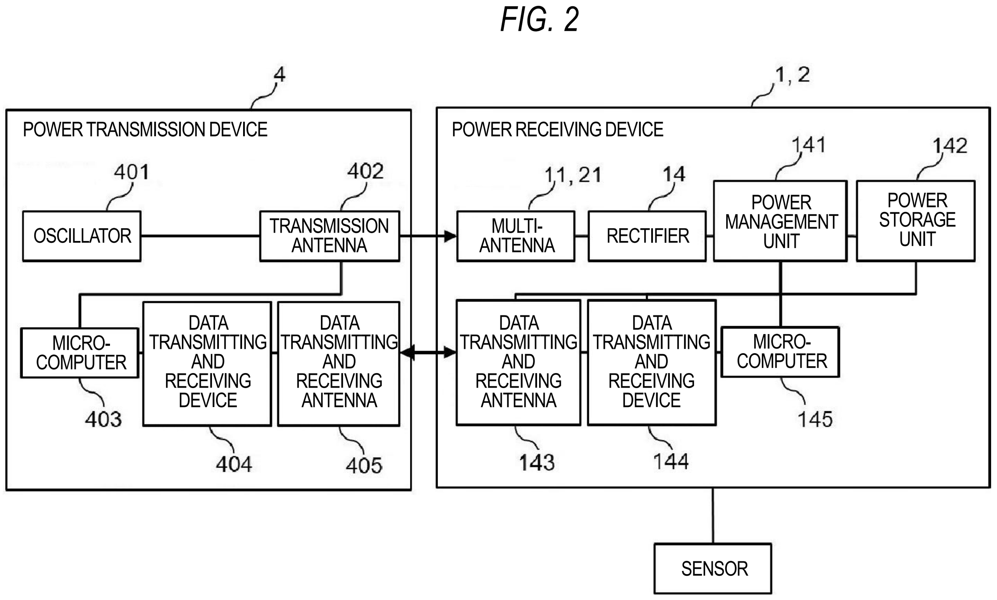

FIG. 2 is a block diagram illustrating a configuration example of the power transmission device 4 and the power receiving device 1, 2 illustrated in FIG. 1. As illustrated in FIG. 2, the power transmission device 4 and the power receiving device 1, 2 are separated from each other at a predetermined interval, for example. For example, the power transmission device 4 and the power receiving device 1, 2 are installed a few meters apart. Specifically, for example, the power transmission device 4 is fixedly installed at a predetermined high position indoors, for example, on a ceiling or a wall. The power receiving device 1, 2 is installed in a predetermined indoor device or placed near a device that requires feeding. In addition, the power receiving device 1, 2 may be carried by a user. The power transmission device 4 is configured to transmit a feeding signal to the power receiving device 1, 2, using a radio wave of a predetermined frequency, for example, in the 920 MHz band. The power receiving device 1, 2 is configured to convert the feeding signal transmitted from the power transmission device 4 into power, and is configured to use the converted power for charging or configured to supply the converted power to a predetermined device.

The power transmission device 4 includes, for example, an oscillator 401, a transmission antenna 402, a microcomputer (controller or MCU) 403, a data transmitter and receiver 404, and a data transmitting and receiving antenna 405. The oscillator 401, the microcomputer 403, the data transmitter and receiver 404, the data transmitting and receiving antenna 405, or any combination of the components may be mounted on, for example, a printed circuit board (PCB).

The oscillator 401 is configured to oscillate a signal in a predetermined frequency band, for example, a 920 MHz band. The oscillated signal may be amplified as necessary to remove unnecessary frequency components.

The transmission antenna 402 is configured to efficiently transmit a radio wave in the 920 MHz band, for example. The transmission antenna 402 is configured to radiate, as a feeding signal, the signal oscillated by the oscillator 401.

The microcomputer 403 is configured to control the operation of the power transmission device 4. The microcomputer 403 is implemented by, for example, a single-board computer equipped with an ARM processor. The microcomputer 403 is configured to control, for example, transmission of a radio wave by the transmission antenna 402.

The data transmitter and receiver 404 is configured to perform processing such as converting digital data into analog data and modulating the analog data. In addition, the data transmitter and receiver 404 is configured to perform processing such as demodulating a data signal received by the data transmitting and receiving antenna 405 and converting the demodulated data into digital data. For example, the data transmitter and receiver 404 is configured to extract a predetermined signal from the data signal received by the data transmitting and receiving antenna 405, convert the signal into digital data, and transmit the digital data to the microcomputer 403.

The data transmitting and receiving antenna 405 is configured to efficiently transmit and receive a radio wave in a 2.4 GHz band, for example. The data transmitting and receiving antenna 405 is configured to radiate the data signal supplied from the data transmitter and receiver 404. In addition, the data transmitting and receiving antenna 405 is configured to receive the data signal transmitted from the power receiving device 1, 2.

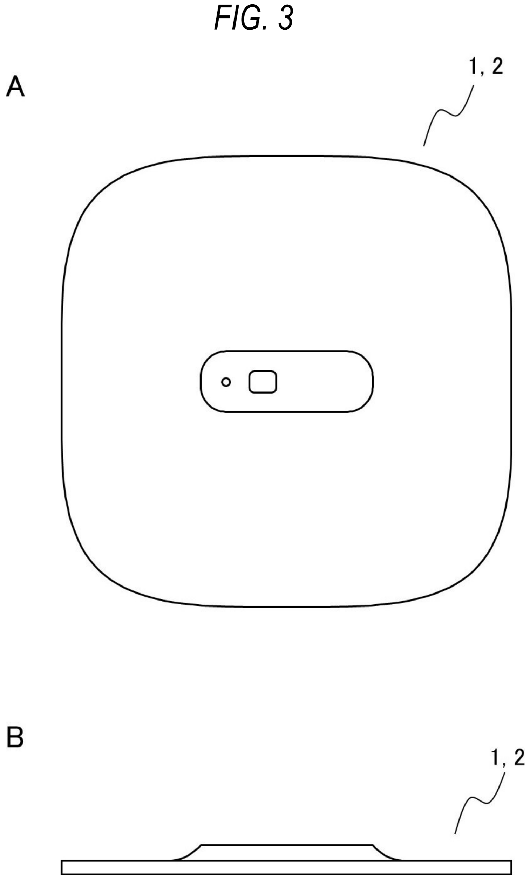

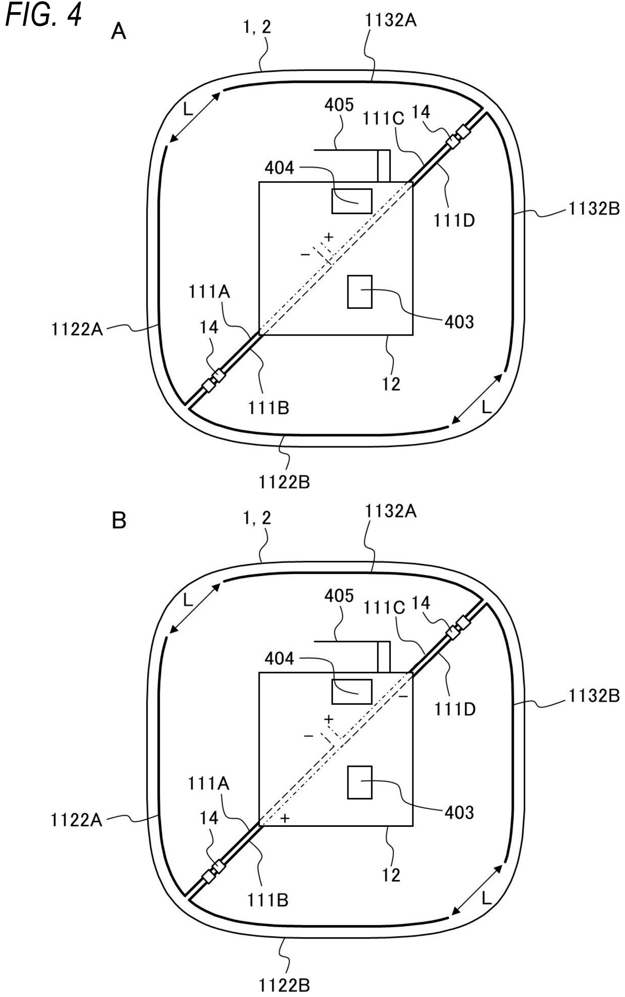

A of FIG. 3 is a top view of a main body of the power receiving device 1. B of FIG. 3 is a top view of the main body of the power receiving device 1. FIG. 4 is a top view of a substrate 10 incorporated in the main body of the power receiving device 1.

The power receiving device 1 includes, for example, a multi-antenna 11, a rectifier 14, a power management unit 141, a power storage unit 142, a microcomputer 145, a data transmitter and receiver 144, and a data transmitting and receiving antenna 143. The multi-antenna 11, the connection line 111, the rectifier 14, the power management unit 141, the power storage unit 142, the microcomputer 145, the data transmitter and receiver 144, and the data transmitting and receiving antenna 143 may be mounted on, for example, a PCB or a flexible printed circuit (FPC). In addition, the power management unit 141, the power storage unit 142, the microcomputer 145, the data transmitter and receiver 144, and the data transmitting and receiving antenna 143 arranged on the substrate 10 form a circuit 12 as a whole.

The connection line 111 is a signal line that connects two linear antennas 1122 and 1132 via the rectifier 14. The connection line 111 is an output line for outputting a signal obtained by rectifying the power signal received from the multi-antenna 11 via the rectifier 14 (rectified signal). The connection line 111 includes two connection lines including a first connection line that outputs a positive power signal and a second connection line that outputs a negative power signal. As a method of connecting the first connection line and the second connection line of the linear antennas 1122 and 1132, a combination of two types is allowed (A and B of FIG. 4).

Specifically, a signal line connected to a linear antenna 1122A via the rectifier 14 is referred to as a connection line 111A, a signal line connected to a linear antenna 1122B via the rectifier 14 is referred to as a connection line 111B, a signal line connected to a linear antenna 1132A via the rectifier 14 is referred to as a connection line 111C, and a signal line connected to a linear antenna 1132B via the rectifier 14 is referred to as a connection line 111D.

In this case, in A of FIG. 4, the connection line 111C is connected to the connection line 111A, and the connection line 111D is connected to the connection line 111B. In B of FIG. 4, the connection line 111D is connected to the connection line 111A, and the connection line 111C is connected to the connection line 111B. In either case, power signals received by the linear antennas 1122 and 1132 can be extracted from the connection line 111.

The multi-antenna 11 is configured to efficiently receive a radio wave in the 920 MHz band, for example. The multi-antenna 11 is configured to receive the feeding signal radiated from the transmission antenna 402.

The rectifier 14 is configured to rectify a radio wave received as the feeding signal and configured to convert the radio wave into a DC voltage.

The power management unit 141 is configured to manage the DC voltage. For example, the power management unit 141 is configured to control a charging voltage based on the DC voltage. The power management unit 141 is configured to control the charging voltage to charge the power storage unit 142. In addition, for example, in a case where power of a predetermined capacity or more is stored in the power storage unit 142, the power management unit 141 supplies the DC voltage to a connected member.

In addition, the power management unit 141 is configured to discharge the power stored in the power storage unit 142 according to the control of the microcomputer 145.

The power storage unit 142 is configured to store power according to an instruction from the power management unit 141. In addition, the power storage unit 142 is configured to discharge the stored power according to the instruction from the power management unit 141.

The microcomputer 145 is configured to control the operation of the power receiving device 1, 2. The microcomputer 145 is driven by the DC voltage supplied from the power management unit 141 or the power stored in the power storage unit 142. The microcomputer 145 is configured to control the power management unit 141 to discharge the power stored in the power storage unit 142.

For example, various sensors may be connected to the power receiving device 1, 2. For example, a thermal sensor, a temperature sensor, an optical sensor, a humidity sensor, a vibration sensor, and the like are connected to the power receiving device 1, 2. The sensors connected to the power receiving device 1, 2 are driven by, for example, the DC voltage supplied from the power management unit 141 or the power discharged from the power storage unit 142. The microcomputer 145 is configured to continuously or intermittently monitors a voltage value at a predetermined portion of the power receiving device 1, 2, a state of the sensor connected to the power receiving device 1, 2, information detected by the sensor, and the like. The microcomputer 145 is configured to transmit, to the data transmitter and receiver 144, as digital data, the voltage value at the predetermined portion of the power receiving device 1, 2, the state of the sensor connected to the power receiving device 1, 2, the information detected by the sensor, and the like. The sensor may be incorporated into the power receiving device 1, 2.

The data transmitter and receiver 144 is configured to perform processing such as converting the digital data supplied from the microcomputer 145 into analog data and modulating the analog data. In addition, the data transmitter and receiver 144 is configured to perform processing such as demodulating the data signal received by the data transmitting and receiving antenna 143 and converting the demodulated data into digital data. The data transmitter and receiver 144 is driven by, for example, the DC voltage supplied from the power management unit 141 or the power discharged from the power storage unit 142.

The data transmitting and receiving antenna 143 is configured to efficiently transmit and receive a radio wave in the 2.4 GHz band, for example. The data transmitting and receiving antenna 143 is configured to radiate the data signal supplied from the data transmitter and receiver 144. In addition, the data transmitting and receiving antenna 143 is configured to receive the data signal transmitted from the power transmission device 4. For example, the data transmitting and receiving antenna 143 is driven by the DC voltage supplied from the power management unit 141 or the power discharged from the power storage unit 142.

<Power Receiving Device (Example 1)>

The configuration of the power receiving device 1 according to Example 1 will be described below.

The power receiving device 1 is a power receiving device configured to receive energy wirelessly transmitted in a three-dimensional space based on wireless power transfer (WPT). Specifically, the power receiving device 1 is a wireless power transfer (WPT) power receiving device configured to receive energy transmitted from a power transmission device using a microwave.

The power receiving device 1 includes a main body, the substrate 10 incorporated in the main body, the multi-antenna 11 incorporated in the main body, the circuit 12 for exhibiting a function of the multi-antenna 11 incorporated in the main body, and a device 13. The power receiving device 1 may be configured to receive a microwave transmitted from the power transmission device via the multi-antenna 11 and supply power to the circuit 12, the device 13, and the like. The circuit 12 is functionally coupled to the rectifier 14. The circuit 12 is connected to the multi-antenna 11 via the rectifier 14.

The multi-antenna 11 includes the connection line 111, a first antenna element 112, and a second antenna element 113.

The power receiving device 1 is connected to a controller (MCU) in a wired manner, and is configured to transmit data related to power reception to the controller. For example, the power receiving device may be configured to feed back a power reception amount to MCU. The circuit 12 may have a function of MCU. Alternatively, the circuit 12 may be configured to perform data communication with MCU (not illustrated).

<Configuration of Substrate 10>

Specifically, the main body of the power receiving device 1 is formed in a multilayer shape. A printed wiring board (substrate) can be provided on a flexible printed circuit (FPC) which is a type of the substrate 10. In particular, the FPC is provided with the multi-antenna 11 configured to receive energy wirelessly transmitted in a three-dimensional space.

The FPC can have flexibility. For example, the FPC can be formed using a thin insulating material (plastic film). Therefore, the sheet-shaped power receiving device 1 can be rolled up together with the incorporated FPC.

<Configuration of Multi-Antenna 11>

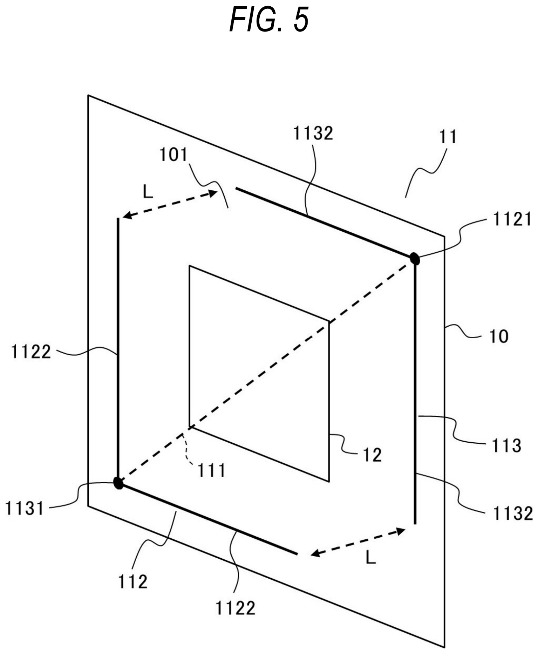

FIG. 5 is a perspective view of a single multi-antenna arranged on the FPC.

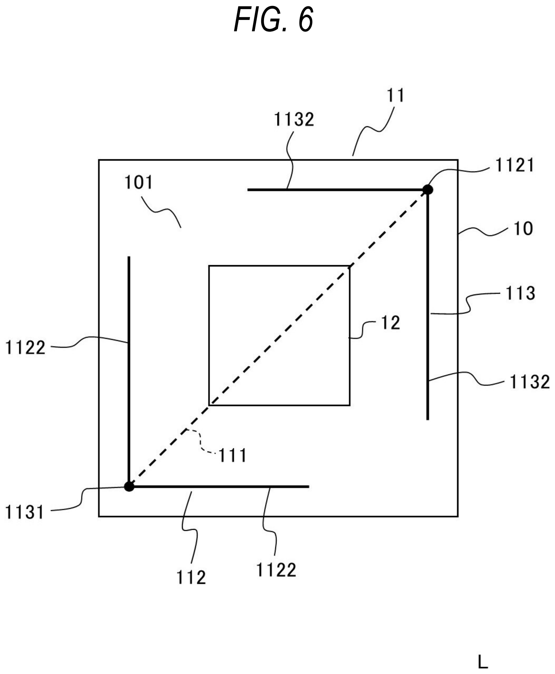

FIG. 6 is a diagram illustrating a configuration according to a first embodiment of the multi-antenna (first example).

The FPC may include only one multi-antenna 11.

The FPC may include a plurality of multi-antennas 11.

The multi-antenna includes a linear antenna such as a linear dipole antenna arranged on the FPC (substrate 10).

The first antenna element 112 includes a first feeding point 1121 and two linear antennas 1122 extending in two different directions from the first feeding point 1121. The second antenna element 113 includes a second feeding point 1131 and two linear antennas 1132 extending in two different directions from the second feeding point 1131.

The number of antenna elements included in the multi-antenna 11 does not need to be two, and the multi-antenna 11 may include more than two antenna elements, that is, the multi-antenna 11 according to the present disclosure is a multi-antenna including at least two or more antenna elements.

The two linear antennas 1122 of the first antenna element 112 are preferably orthogonal to each other at an angle of 90 degrees at the first feeding point 1121. The two linear antennas 1132 of the second antenna element 113 are preferably orthogonal to each other at an angle of 90 degrees at the second feeding point 1131.

Specifically, the two linear antennas 1122 and 1132 included in the first antenna element 112 and the second antenna element 113 extend in two directions at an angle of 90 degrees orthogonal to each other from the first feeding point 1121 and the second feeding point 1131 in a shape bent in an L shape with the first feeding point 1121 and the second feeding point 1131 as apexes, respectively. Preferably, the linear antennas 1122 and 1132 extend from the first feeding point 1121 and the second feeding point 1131, respectively, by substantially equal lengths.

Accordingly, it is possible to prevent the linear antennas 1122 and 1132 from interfering with each other and causing electromagnetic coupling, and to improve power reception efficiency. In addition, the manufacturing cost can be reduced by reducing the number of linear antennas.

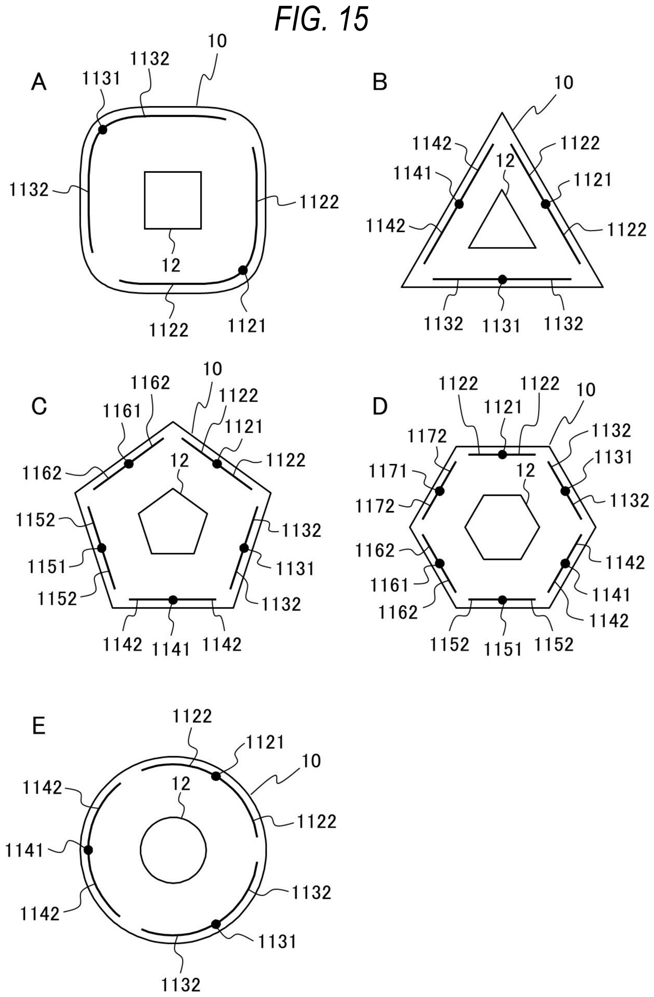

Although symmetrically implemented, the linear antennas 1122 and 1132 may be partially asymmetrically implemented at the time of mounting. The linear antennas 1122 and 1132 are not necessarily straight lines. For example, a curved antenna may be used as illustrated in FIGS. 4, 12, and 13, and A of FIG. 15.

The first antenna element 112 and the second antenna element 113 are arranged so as to surround one region 101 of the substrate 10.

Specifically, the first antenna element 112 and the second antenna element 113 extend along four sides of the substantially regular polygonal region 101.

The two linear antennas 1122 and 1132 formed in a shape bent in an L shape with the first feeding point 1121 and the second feeding point 1131 as apexes are arranged in point-symmetrically with respect to a center of the region 101 so as to surround the region 101 of the substrate 10. Accordingly, the first antenna element 112 and the second antenna element 113 are arranged to face each other so as to surround the substantially square region 101.

For example, a length of one side of the substrate 10 is approximately 8 cm, and lengths of the linear antennas 1122 and 1132 of the first antenna element 112 and the second antenna element 113 are approximately 7 cm. The circuit 12 is formed in a square shape, and a length of one side is about 3.5 cm.

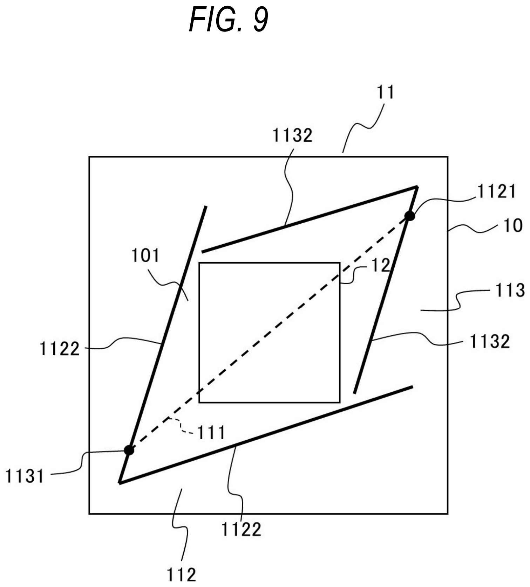

The first feeding point 1121 and the second feeding point 1131 do not necessarily have to be arranged at the apexes of the two linear antennas 1122 and 1132 bent in an L shape, respectively. For example, like the multi-antenna of FIG. 9, the first feeding point 1121 and the second feeding point 1131 may be provided at positions on the linear antennas 1122 and 1132 deviated (offset) from the bent apexes.

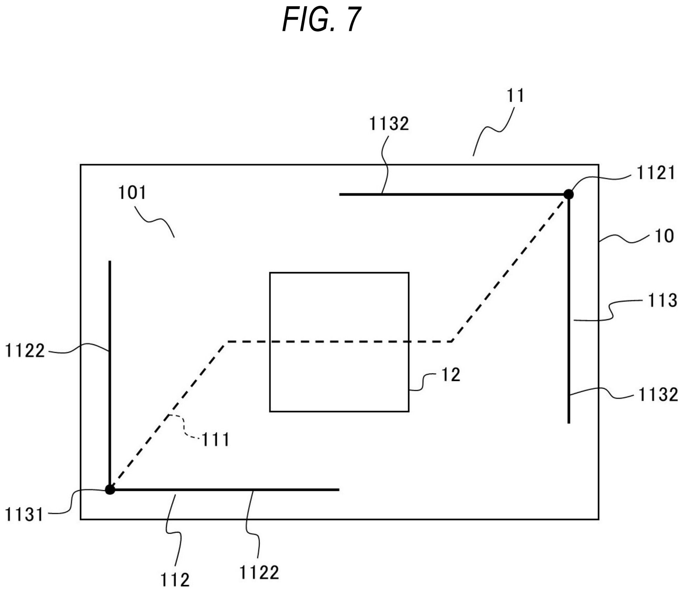

FIG. 7 is a diagram illustrating a configuration according to a second embodiment of the multi-antenna (first example).

The region 101 surrounded by the first antenna element 112 and the second antenna element 113 does not need to have a square shape, and may have a rectangular shape. By arranging the first antenna element 112 and the second antenna element 113 so as to surround the substantially square region 101, it is possible to implement a multi-antenna with a small substrate area, low manufacturing cost, and excellent reception performance, as compared with the case of arranging the first antenna element 112 and the second antenna element 113 so as to surround the rectangular region 101.

In addition, it is desirable that a distance from one end of the first antenna element to one end of the second antenna element close to the one end of the first antenna element is $\lambda/64$ or more, where $\lambda$ is an operating wavelength of the power receiving device. In particular, it is preferable that a distance from one end of the first antenna element to one end of the second antenna element close to the one end of the first antenna element is separated by a distance of $\lambda/32$ or more.

Specifically, in FIG. 5, one end of the linear antenna 1132 of the first antenna element is separated by L from one end of the linear antenna 1122 of the second antenna element. Similarly, the other end of the linear antenna 1132 of the first antenna element is separated by L from the other end of the linear antenna 1122 of the second antenna element.

In a case where the separation distance L is too small, the first antenna element and the second antenna element interfere with each other, and electromagnetic coupling occurs, which leads to reduction of the power reception efficiency. On the other hand, in a case where the separation distance L is increased, the substrate area is increased, which leads to an increase in the manufacturing cost.

Specifically, it is desirable that L is $\lambda/64$ or more, and more preferably $\lambda/32$ or more, where $\lambda$ is the operating wavelength of the power receiving device. In addition, L may be a distance smaller than $\lambda$ or any integer multiple of $\lambda$. In addition, the linear antennas 1122 and 1132 may be separated by a distance of $\lambda/16$ or more.

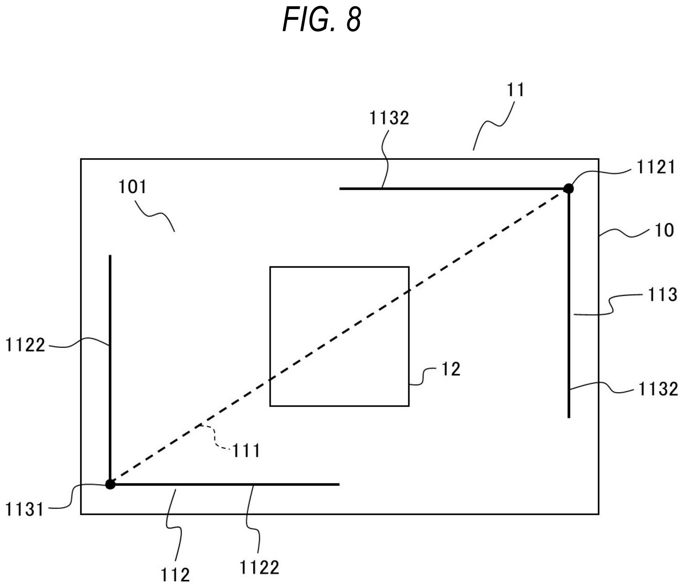

FIG. 8 is a diagram illustrating a configuration according to a third embodiment of the multi-antenna (first example).

Basic configurations of the first antenna element 112, the second antenna element 113, the connection line 111, and the like are similar to those of the multi-antenna (first example) and the multi-antenna (second example), and thus detailed description thereof will be omitted.

In the third embodiment of the multi-antenna (first example), the connection line 111 linearly connects the first feeding point 1121 and the second feeding point 1131 of the first antenna element 112 and the second antenna element 113 arranged so as to surround the rectangular region 101.

In this case, the connection line 111 is connected to the first feeding point of the first antenna element so as not to extend along a bisector of an interior angle formed by two linear antennas with the first feeding point of the first antenna element as an apex. The connection line 111 is connected to the second feeding point of the second antenna element so as not to extend along a bisector of an interior angle formed by two linear antennas with the second feeding point of the second antenna element as an apex.

In the first antenna element 112 and the second antenna element 113 arranged so as to surround the square region 101, the connection line 111 may also be connected to the first feeding point of the first antenna element so as not to extend along the bisector of the interior angle formed by the two linear antennas with the first feeding point of the first antenna element as an apex. Similarly, the connection line 111 may be connected to the second feeding point of the second antenna element so as not to extend along the bisector of the interior angle formed by two linear antennas with the second feeding point of the second antenna element as an apex.

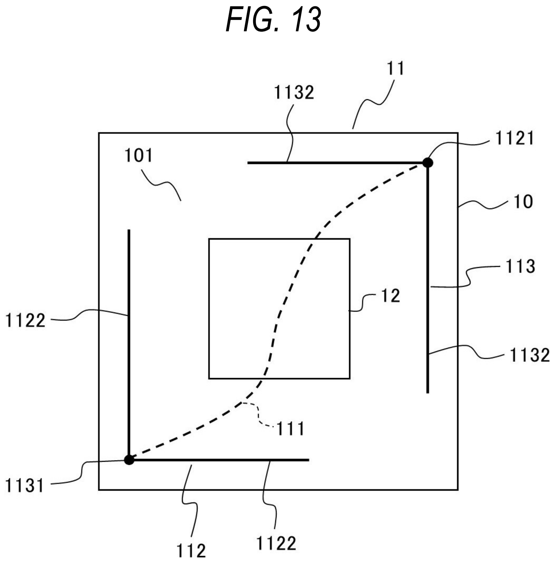

Even in the case of an eighth embodiment of the multi-antenna (first example) in FIG. 13 described later, the connection line 111 may be connected to the first feeding point of the first antenna element so as not to extend along the bisector of the interior angle formed by the two linear antennas with the first feeding point of the first antenna element as an apex. Similarly, the connection line 111 may be connected to the second feeding point of the second antenna element so as not to extend along the bisector of the interior angle formed by two linear antennas with the second feeding point of the second antenna element as an apex.

In this case, it is also possible to implement a multi-antenna used for a power receiving device of WPT using a microwave, which is inexpensive and excellent in power reception efficiency.

FIG. 9 is a diagram illustrating a configuration according to a fourth embodiment of the multi-antenna (first example).

Basic configurations of the first antenna element 112, the second antenna element 113, the connection line 111, and the like are similar to those of the multi-antenna (first example) and the multi-antenna (second example), and thus detailed description thereof will be omitted.

In the fourth embodiment of the multi-antenna (first example), the connection line 111 linearly connects the first feeding point 1121 and the second feeding point 1131 of the first antenna element 112 and the second antenna element 113 arranged so as to surround the rhombus or quadrangular region 101.

The first antenna element 112 extends in a first direction toward a first end and extends in a second direction toward a second end. The second antenna element 113 extends in a third direction toward a third end and extends in a fourth direction toward a fourth end. An interior angle formed by the first direction and the second direction and an interior angle formed by the third direction and the fourth direction are less than 90 degrees.

Specifically, interior angles of the bent apexes of the two linear antennas 1122 and 1132 are formed to be acute angles less than 90 degrees. The first feeding point 1121 and the second feeding point 1131 may not be arranged at the respective bent apexes of the two linear antennas 1122 and 1132, and may be provided at positions offset from the bent apexes.

Accordingly, it is possible to implement a multi-antenna having a small substrate area, low manufacturing cost, and excellent reception performance.

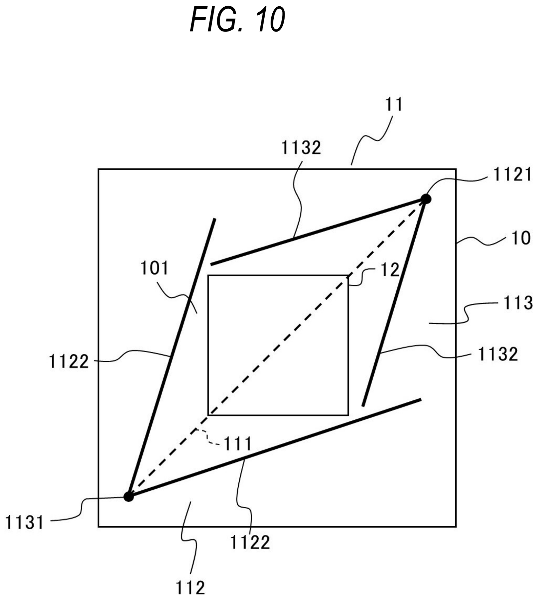

FIG. 10 is a diagram illustrating a configuration according to a fifth embodiment of the multi-antenna (first example).

Basic configurations of the first antenna element 112, the second antenna element 113, the connection line 111, and the like are similar to those of the fourth embodiment of the multi-antenna (first example) , and thus detailed description thereof will be omitted.

An interior angle formed by two linear antennas with the first feeding point of the first antenna element 112 as an apex and an interior angle formed by two linear antennas with the second feeding point of the second antenna element 113 as an apex, are less than 90 degrees.

Specifically, the first feeding point 1121 and the second feeding point 1131 are arranged at the bent apexes of the two linear antennas 1122 and 1132, respectively.

Accordingly, it is possible to implement a preferable multi-antenna having the same substrate area and more excellent reception performance as compared with the fourth embodiment of the multi-antenna (first example).

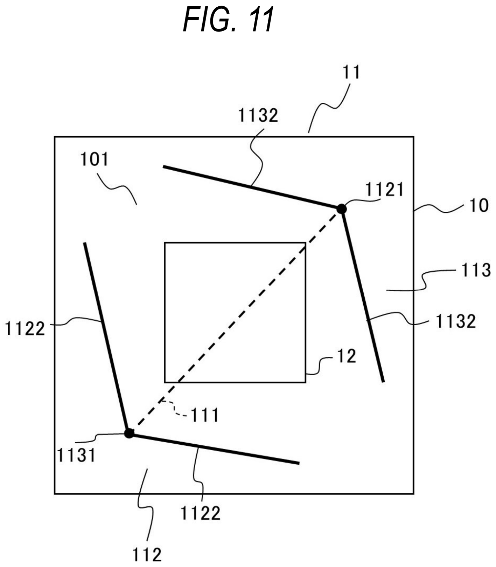

FIG. 11 is a diagram illustrating a configuration according to a sixth embodiment of the multi-antenna (first example).

Basic configurations of the first antenna element 112, the second antenna element 113, the connection line 111, and the like are similar to those of the multi-antenna (first example) and the multi-antenna (second example), and thus detailed description thereof will be omitted.

In the sixth embodiment of the multi-antenna (first example), the connection line 111 linearly connects the first feeding point 1121 and the second feeding point 1131 of the first antenna element 112 and the second antenna element 113 arranged so as to surround the rhombus or quadrangular region 101.

The first antenna element 112 extends in a first direction toward a first end and extends in a second direction toward a second end. The second antenna element 113 extends in a third direction toward a third end and extends in a fourth direction toward a fourth end. An interior angle formed by the first direction and the second direction and an interior angle formed by the third direction and the fourth direction are 90 degrees or more.

An interior angle formed by two linear antennas with the first feeding point of the first antenna element 112 as an apex and an interior angle formed by two linear antennas with the second feeding point of the second antenna element 113 as an apex, are 90 degrees or more.

Specifically, interior angles of the bent apexes of the two linear antennas 1122 and 1132 are formed to be obtuse angles of 90 degrees or more. The first feeding point 1121 and the second feeding point 1131 may not be arranged at the respective bent apexes of the two linear antennas 1122 and 1132, and may be provided at positions offset from the bent apexes.

The first feeding point 1121 and the second feeding point 1131 may be arranged at the bent apexes of the two linear antennas 1122 and 1132, respectively.

Accordingly, the number of antennas is small, the manufacturing cost is low, and a radio wave can be received in a wide range. It is possible to implement a multi-antenna that is compact and highly efficient and has excellent reception performance.

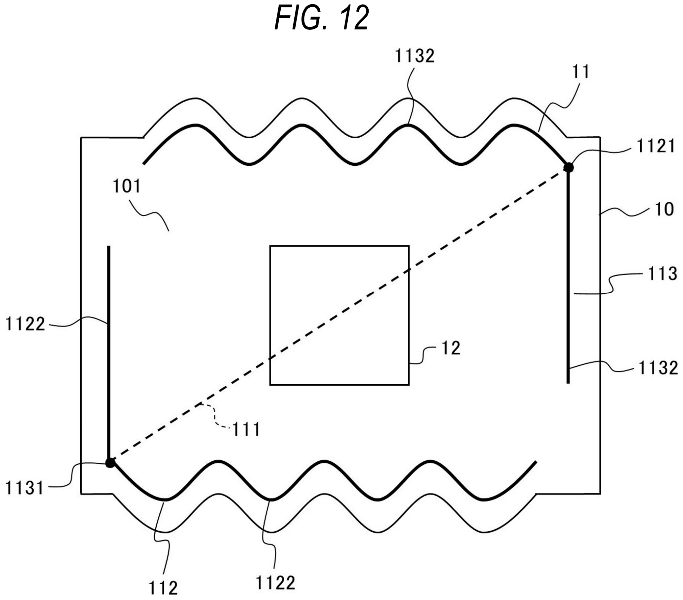

FIG. 12 is a diagram illustrating a configuration according to a seventh embodiment of the multi-antenna (first example).

Basic configurations of the first antenna element 112, the second antenna element 113, the connection line 111, and the like are similar to those of the third embodiment of the multi-antenna (first example), and thus detailed description thereof will be omitted.

In the present disclosure, of the linear antenna 1122 and the linear antenna 1132 constituting the first antenna element 112 and the second antenna element 113, the linear antenna provided along a long side is formed in a shape in which bending is repeated in a wavy line shape. In addition, of the linear antenna 1122 and the linear antenna 1132, the linear antenna provided along a short side may be formed in a shape in which bending is repeated in a wavy line shape.

The linear antenna 1122 and the linear antenna 1132 do not necessarily have to be formed in a broken line shape having a fixed wavelength, and may have any bent shape. Accordingly, for example, the substrate 10 can be formed along shapes of the linear antenna 1122 and the linear antenna 1132. The linear antenna 1122 and the linear antenna 1132 can be freely arranged along the outer shape of the receiving device.

For example, the substrate and the housing (case) may be formed in a wavy line shape along the shape of the linear antenna 1122 and the linear antenna 1132. For example, in a case where the power receiving device 1, 2 is a portable device held by a user, the housing formed in a wavy line shape may be used as a grip when the user holds the power receiving device.

FIG. 13 is a diagram illustrating a configuration according to the eighth embodiment of the multi-antenna (first example).

Basic configurations of the first antenna element 112, the second antenna element 113, the connection line 111, and the like are similar to those of the multi-antenna (first example) and the multi-antenna (second example), and thus detailed description thereof will be omitted.

The connection line 111 is bent and connected to the first feeding point of the first antenna element. The connection line 111 is bent and connected to the second feeding point of the second antenna element.

In the present disclosure, the connection line 111 is bent under a predetermined curvature, and is bent and connected to the first feeding point and the second feeding point.

In such a case, the number of antennas is also small, the manufacturing cost is also low, and a radio wave can also be received in a wide range. It is possible to implement a multi-antenna that is compact and highly efficient and has excellent reception performance.

<Configuration of Multi-Antenna 11 (Modification)>

A of FIG. 15 is a diagram illustrating a configuration according to a first modification of the multi-antenna (first example).

B of FIG. 15 is a diagram illustrating a configuration according to a second modification of the multi-antenna (first example).

C of FIG. 15 is a diagram illustrating a configuration according to a third modification of the multi-antenna (first example).

D of FIG. 15 is a diagram illustrating a configuration according to a fourth modification of the multi-antenna (first example).

E of FIG. 15 is a diagram illustrating a configuration according to a fifth modification of the multi-antenna (first example).

The number of the antenna elements 112 and 113 included in the multi-antenna 11 according to the present disclosure is not limited to two. In addition, the linear antennas 1122 and 1132 included in the antenna elements 112 and 113 may be arranged line-symmetrically instead of point-symmetrically so as to surround the region 101. In addition, the region surrounded by the linear antennas does not need to be polygonal, and may be circular or elliptical.

As illustrated in A of FIG. 15, the linear antennas 1122 and 1132 of the first antenna element 112 and the second antenna element 113 may extend in a curved shape along four sides of the substantially square region 101 in which the circuit 12 is arranged.

As illustrated in B of FIG. 15, linear antennas 1122, 1132, and 1142 may be arranged so as to surround the substantially equilateral triangular region 101 in which the circuit 12 is arranged. The linear antennas 1122, 1132, and 1142 form an equilateral triangle that is line-symmetric.

As illustrated in C of FIG. 15, linear antennas 1122 to 1162 may be arranged so as to surround the substantially equilateral pentagonal region 101 in which the circuit 12 is arranged. The linear antennas 1122 to 1162 form a regular pentagon that is line-symmetric.

As illustrated in D of FIG. 15, linear antennas 1122 to 1172 may be arranged so as to surround the substantially equilateral hexagonal region 101 in which the circuit 12 is arranged. The linear antennas 1122 to 1172 form a regular hexagon that is line-symmetric and point-symmetric.

As illustrated in E of FIG. 15, the linear antennas 1122, 1132, and 1142 may be arranged so as to surround the substantially circular region 101 in which the circuit 12 is arranged. The linear antennas 1122, 1132, and 1142 form a circular shape.

<Configuration of Connection Line 111>

The connection line 111 is a DC connection line that connects dipole antennas. Preferably, each antenna element has the same length in the left-right direction so as to form a balanced circuit. A rectifier is provided at a center thereof. Each antenna is connected to the rectifier, which are connected by the connection line 111. At this time, the rectifiers are connected with the same polarity. The same applies to all examples related to the multi-antenna.

It should be understood that any type of rectifier can be applied in the present example.

Generally, the connection line 111 connecting the antenna elements is arranged so as not to have a complicated configuration. The connection line 111 preferably connects feeding points of the antenna elements at the shortest distance.

One end of the connection line 111 is connected to the first feeding point 1121 of the first antenna element 112, and the other end of the connection line 111 is connected to the second feeding point 1131 of the second antenna element 113. When the number of antenna elements constituting the multi-antenna 11 is more than two, the connection line 111 connects feeding points of the antenna elements.

The connection line 111 is connected to the first feeding point 1121 and the second feeding point 1131 of the first antenna element 112 and the second antenna element 113, along a bisector of an interior angle with the first feeding point 1121 and the second feeding point 1131 of the first antenna element 112 and the second antenna element 113 as apexes.

Specifically, the connection line 111 is connected to the first feeding point 1121 of the first antenna element 112 along a bisector of an interior angle formed by two linear antennas of the first antenna element 112. The connection line 111 is connected to the second feeding point 1131 of the second antenna element 113 along a bisector of an interior angle formed by two linear antennas of the second antenna element 113.

The connection line 111 may be connected to the first feeding point 1121 and the second feeding point 1131 of the first antenna element 112 and the second antenna element 113 so as not to extend along the bisector of the interior angle with the first feeding point 1121 and the second feeding point 1131 of the first antenna element 112 and the second antenna element 113 as apexes.

Specifically, the connection line 111 is connected to the first feeding point 1121 of the first antenna element 112 so as not to extend along the bisector of the interior angle formed by the two linear antennas of the first antenna element 112. The connection line 111 is connected to the second feeding point 1131 of the second antenna element 113 so as not to extend along the bisector of the interior angle formed by the two linear antennas of the second antenna element 113.

Specifically, the connection line 111 is connected to the first feeding point 1121 and the second 1131 of the first antenna element 112 and the second antenna element 113 via the connection line 111 and rectifiers 1123 and 1133, respectively.

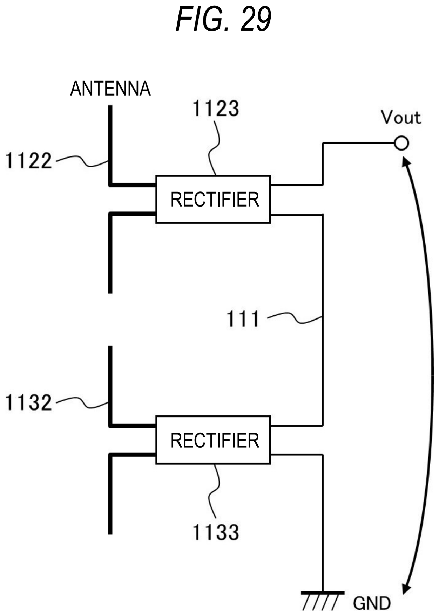

FIG. 29 illustrates a connection relation among the antenna elements 112 and 113, the connection line 111, and the rectifiers 1123 and 1133.

Accordingly, a potential difference between the multi-antenna and GND can be increased, and the performance of the multi-antenna can be improved.

In addition, the connection line 111 can be understood as a signal line for extracting an output from a rectenna including the antenna element 112, the rectifier 1123, the antenna element 113, and the rectifier 1133. Specifically, the connection line 111 is a signal line that extracts radio wave energy received by the rectenna as a current.

<Configuration of Circuit 12>

The main body of the power receiving device 1 is incorporated with the circuit 12 for exhibiting the function of the multi-antenna incorporated in the FPC. The FPC and the circuit can be connected by wire.

Any device can be added to the circuit 12 in order to improve a flow of a balanced current flowing in the multi-antenna. For example, a filter or a mixer may be added.

The circuit 12 is provided at a position not overlapping any antenna element included in the multi-antenna 11 when viewed from a direction orthogonal to a surface of the substrate 10. The same applies to all examples related to the multi-antenna.

For example, the circuit 12 may be provided in a central region of the region 101 of the substrate 10 surrounded by the first antenna element 112 and the second antenna element 113.

A distance from the first feeding point 1121 of the first antenna element 112 to the circuit 12 is preferably provided at a position substantially equal to a distance from the second feeding point 1131 of the second antenna element 113 to the circuit 12.

Accordingly, the region of the circuit 12 is used as means for preventing electromagnetic coupling, so that it is possible to implement a power receiving device with a small substrate area, low manufacturing cost, and excellent power reception efficiency.

The multi-antenna 11 may include an antenna element other than the first antenna element 112 and the second antenna element 113. Even in such a case, the circuit 12 is preferably provided at a position not overlapping any antenna element including the other antenna element.

This is because when the antenna element and the circuit 12 overlap each other, the power reception efficiency decreases due to electromagnetic coupling between the antenna element and the circuit 12.

Specifically, the first antenna element 112 and the second antenna element 113 are preferably separated from the circuit 12 by a distance of $\lambda/8$ or more. In particular, it is desirable that the first antenna element 112 and the second antenna element 113 are separated from the circuit 12 by a distance of $\lambda/4$ or more.

$\lambda$ is a wavelength (operating wavelength) of an electromagnetic wave (microwave) for receiving energy. The wavelength $\lambda$ can be obtained as $\lambda$ (m) = c (m/s) $\div$ f (Hz) based on the operating frequency f (Hz). c (m/s) is the velocity of light.

Accordingly, a power receiving device having excellent power reception efficiency can be implemented in which electromagnetic coupling between the antenna element and the circuit 12 can be effectively prevented.

A shape of the circuit 12 may be formed so as to be separated in a direction opposite to the directivity of the first antenna element 112 and the second antenna element 113.

The directivity of the first antenna element 112 is directed from the inside of the region 101 to the outside direction passing through the first feeding point 1121. In addition, the directivity of the second antenna element 113 is directed from the region 101 to the outside direction passing through the second feeding point 1131.

In this case, the circuit 12 is formed in a quadrangular shape when viewed from a direction orthogonal to the surface of the substrate 10. In the present disclosure, a first apex 121 and a second apex 122 of the quadrangular circuit 12 may be recessed in a direction away from the first feeding point 1121 of the first antenna element 112 and the second feeding point 1131 of the second antenna element 113, respectively, or may have a cutout shape.

In addition, the circuit 12 may be rotated by 45 degrees and arranged in the region 101.

<Power Receiving Device (Example 2)>

The configuration of the power receiving device 2 according to Example 2 will be described below. A basic configuration is the same as that of the power receiving device 1 according to Example 1, and description of the common configuration will be omitted.

The power receiving device 2 is a power receiving device configured to receive energy wirelessly transmitted in a three-dimensional space based on wireless power transfer (WPT). Specifically, the power receiving device 2 is a power receiving device for wireless power transfer (WPT) used to receive energy transmitted from a power transmission device using a microwave.

The power receiving device 2 includes a main body, a substrate 20 incorporated in the main body, a multi-antenna 21 incorporated in the main body, a circuit 22 for exhibiting a function of the multi-antenna 21 incorporated in the main body, and a device 23. The power receiving device 2 may be configured to receive a microwave transmitted from a power transmission device via the multi-antenna 21 and supply power to the circuit 22, the device 23, and the like.

The multi-antenna 21 includes a connection line 211 and linear antennas 212 to 217.

<Configuration of Multi-Antenna 21>

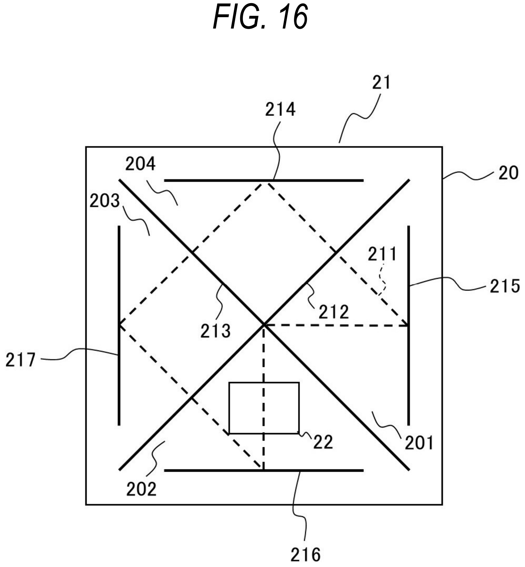

FIG. 16 is a diagram illustrating a configuration according to a first embodiment of the multi-antenna (second example).

The multi-antenna 21 includes two linear antennas 212 and 213 arranged in a substantially cross shape so as to define the substrate 20 in four regions 201, 202, 203, and 204, and four linear antennas 214 to 217 arranged on four sides of a substantially quadrangular shape at the outermost side on the substrate so as to surround the four regions 201, 202, 203, and 204.

Accordingly, an antenna length of the linear antenna can be made longer with the same substrate area. Accordingly, it is possible to implement a power receiving device having excellent power reception efficiency.

The linear antennas 212 to 217 are not necessarily straight lines. For example, the antennas 212 to 217 may be a curve.

Specifically, the two linear antennas 212 and 213 having the same length are orthogonal to each other at an angle of 90 degrees at a central portion thereof. In addition, the four linear antennas 214 to 217 arranged to surround the two linear antennas 212 and 213 arranged to be orthogonal to each other from the outside are arranged to be inclined at an angle of 45 degrees with respect to the two linear antennas 212 and 213, respectively.

Accordingly, it is possible to implement a power receiving device having excellent power reception efficiency as compared with the power receiving device (Example 1).

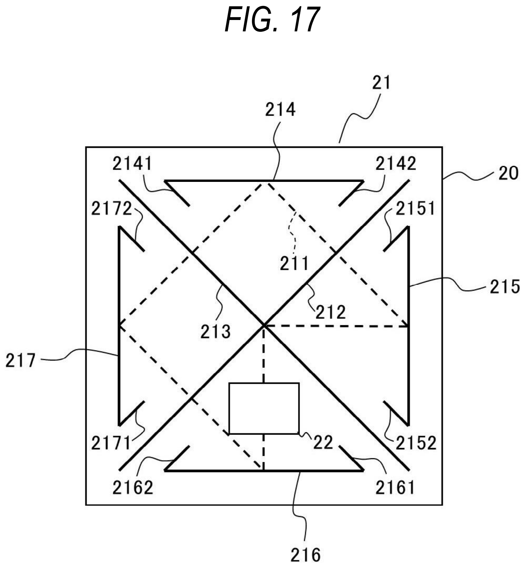

FIG. 17 is a diagram illustrating a configuration according to a second embodiment of the multi-antenna (second example).

At least one end of at least a part of the four linear antennas 214 to 217 is bent toward the inside or the outside of the four regions.

Specifically, both ends of the four linear antennas 214 to 217 have bent portions 2141, 2142, 2151, 2152, 2161, 2162, 2171, and 2172 bent toward the inside of the four regions, respectively.

In the present disclosure, as an example, an aspect in which both ends of all of the four linear antennas 214 to 217 are bent toward the inside of the four regions is disclosed as an example, and an aspect in which either end or both ends of a part or all of the four linear antennas 214 to 217 are bent toward the inside of the four regions may be adopted.

Specifically, both ends of the four linear antennas 214 to 217 provided outside the linear antennas 212 and 213 are bent inward at an angle of 45 degrees, thereby forming the bent portions 2141, 2142, 2151, 2152, 2161, 2162, 2171, and 2172.

In the present disclosure, the bent portions 2141, 2142, 2151, 2152, 2161, 2162, 2171, and 2172 may be bent toward the outside of the four regions.

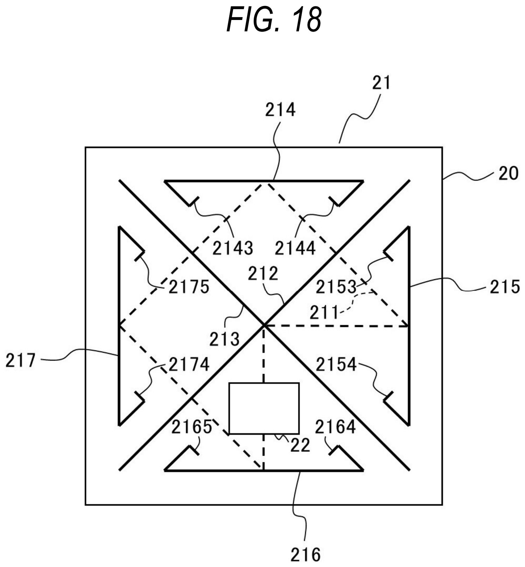

FIG. 18 is a diagram illustrating a configuration according to a third embodiment of the multi-antenna (second example).

At least one end of at least a part of the four linear antennas 214 to 217 is folded twice toward the inside or the outside of the four regions.

Specifically, both ends of the four linear antennas 214 to 217 have folded portions 2143, 2144, 2153, 2154, 2163, 2164, 2173, and 2174 folded twice toward the inside of the four regions, respectively.

Both ends of the four linear antennas 214 to 217 provided outside the linear antennas 212 and 213 are folded toward the inside at angles of 45 degrees and 90 degrees, thereby forming the folded portions 2143, 2144, 2153, 2154, 2163, 2164, 2173, and 2174.

Accordingly, an antenna length of the linear antenna can be made longer with the same substrate area. Accordingly, it is possible to implement a power receiving device having excellent power reception efficiency.

The folded portions 2143, 2144, 2153, 2154, 2163, 2164, 2173, and 2174 may be folded twice toward the outside of the four regions.

<Configuration of Multi-Antenna 21 (Modification)>

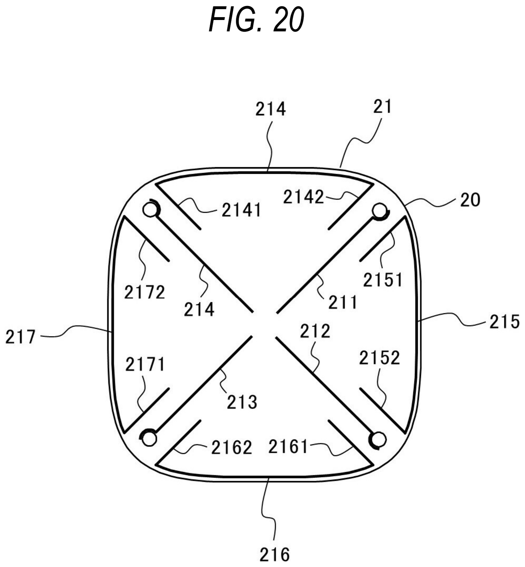

FIG. 20 is a diagram illustrating a configuration according to a modification of the multi-antenna (second example).

The number of linear antennas 212 to 217 included in the multi-antenna 21 according to the present disclosure is not limited to six.

The four linear antennas 214 to 217 arranged on four sides of a substantially quadrangular shape are not necessarily straight lines. For example, the antennas 214 to 217 may be a curve.

The two linear antennas 212 and 213 arranged in a substantially cross shape are not necessarily straight lines. For example, the linear antennas 212 and 213 may be a curve.

<Configuration of Connection Line 211>

The connection line 211 connects all of the six linear antennas 212 to 217 clockwise or counterclockwise in a single stroke manner. When the number of linear antennas constituting the multi-antenna 21 is more than six, the connection line 211 connects the linear antennas.

The connection line 211 connects an orthogonal portion of the two linear antennas 212 and 213 to a substantially central portion of the linear antenna 215 at an angle of 90 degrees. The linear antennas 212 and 213 and the connection line 211 form an angle of 45 degrees.

As an example, a case will be described in which the connection line 211 connects all the six linear antennas 212 to 217 clockwise in a single stroke manner.

The connection line 211 connects an orthogonal portion of the two linear antennas 212 and 213 to a substantially central portion of the linear antenna 216 at an angle of 90 degrees. The linear antennas 212 and 213 and the connection line 211 form an angle of 45 degrees.

The connection line 211 is connected to the substantially central portion of the linear antenna 216 at an angle of 45 degrees, and is connected to a substantially central portion of the linear antenna 217 at an angle of 45 degrees.

The connection line 211 is connected to the substantially central portion of the linear antenna 217 at an angle of 45 degrees, and is connected to a substantially central portion of the linear antenna 214 at an angle of 45 degrees.

The connection line 211 is connected to the substantially central portion of the linear antenna 214 at an angle of 45 degrees, and is connected to the substantially central portion of the linear antenna 215 at an angle of 45 degrees.

<Configuration of Circuit 22>

The circuit 22 is provided at a position not overlapping any linear antenna included in the multi-antenna 21 when viewed from a direction orthogonal to a surface of the substrate 20.

For example, the circuit 22 may be provided inside any of the four regions 201, 202, 203, and 204 defined by the linear antennas 212 to 217 at a position not overlapping the linear antenna.

Accordingly, the region of the circuit 22 is used as means for preventing electromagnetic coupling, so that it is possible to implement a power receiving device with a small substrate area, low manufacturing cost, and excellent power reception efficiency.

<Modification>

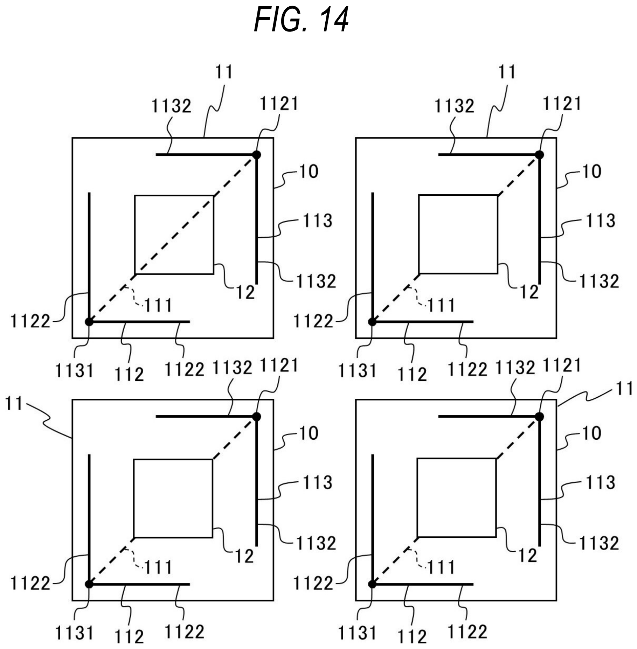

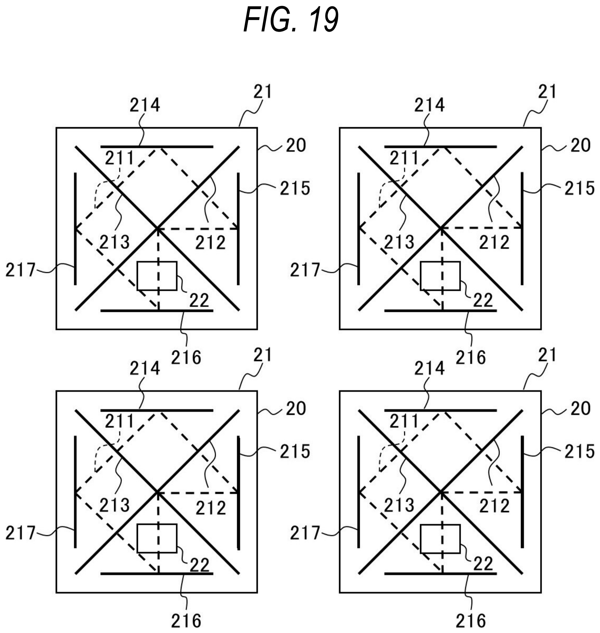

As illustrated in FIGS. 14 and 19, a plurality of multi-antennas 11, 21 may be arranged in a vertical direction (y-axis direction) and/or a horizontal direction (x-axis direction). In this case, the adjacent multi-antennas 11, 21 may be offset (shifted) from each other. An interval of the offset is freely selected.

When the plurality of multi-antennas 11, 21 are juxtaposed in the vertical direction (y-axis direction) and/or the horizontal direction (x-axis direction), the multi-antenna 11 according to Example 1 and the multi-antenna 21 according to Example 2 may be freely arranged in combination.

The adjacent multi-antennas 11, 21 may be offset from each other.

Any of the plurality of multi-antennas 11, 21 may be rotated clockwise or counterclockwise.

When the plurality of multi-antennas 21 are juxtaposed, the multi-antennas 21 may be arranged so as to share at least a part of the outermost linear antennas 214 to 217.

As described above, generally, a dipole antenna is also called a 1/2 $\lambda$ (half wavelength) dipole antenna, and a length d thereof can be obtained as follows based on the operating frequency f (Hz).

$$d = 3 \times 108/2f \ (m)$$

or

$$d = \{3 \times 108/2f\} \times (0.96 \ to \ 0.97) \ (m)$$

Therefore, those skilled in the art will be able to schematically understand dimensions of the linear antennas included in the multi-antenna 11, 21 of the present example from the above description. However, it should be understood that the dimensions of the linear antennas included in the multi-antenna 11, 21 can be variously modified according to the embodiments.

<Configuration of Multi-Antenna>

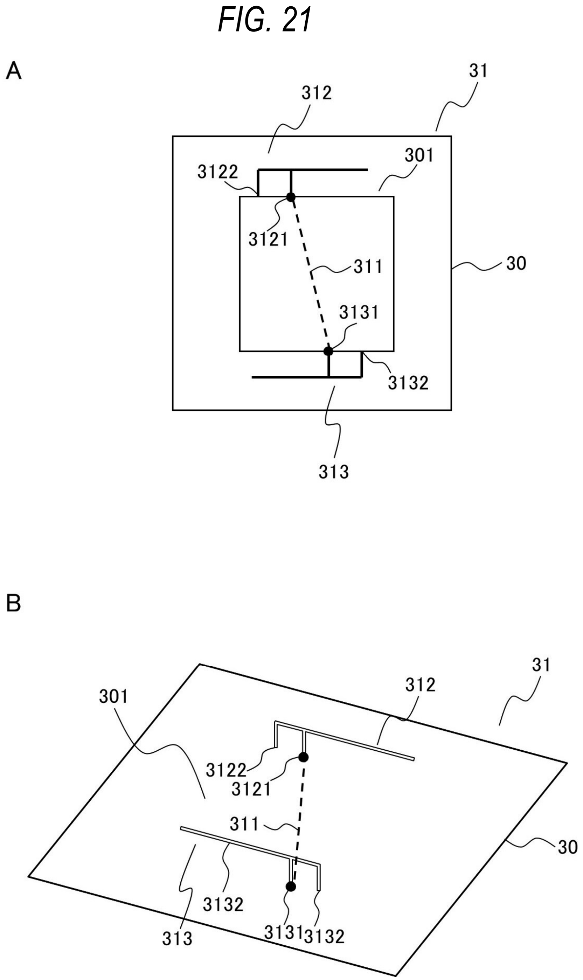

FIG. 21 is a diagram illustrating a configuration according to a first embodiment of a multi-antenna (third example).

Basic configurations of a first antenna element 312, a second antenna element 313, a connection line 311, a substrate 30, and the like are similar to those of the first antenna element 112, the second antenna element 113, the connection line 111, and the substrate 10 in the multi-antenna (first example) and the multi-antenna (second example), and thus detailed description thereof will be omitted. A circuit may be arranged inside a region 301.

In the first embodiment of the multi-antenna (third example), the first antenna element 312 and the second antenna element 313 are inverted-F antennas. The connection line 311 is connected to a first feeding point 3121 of the first antenna element 312 and a second feeding point 3131 of the second antenna element 313. In addition, a first ground point 3122 of the first antenna element 312 and a second ground point 3132 of the second antenna element 313 are connected to a ground (substrate 31). The first ground point 3122 and the second ground point 3132 are not necessarily connected to a common ground, and may be connected to independent grounds. For example, each of the first ground point 3122 and the second ground point 3132 may be connected to a ground line divided independently into a plurality of regions.

The connection line 311 is wired so as not to be connected to the ground (substrate 31). The connection line 311 is not necessarily required to connect the first feeding point 3121 and the second feeding point 3131 at the shortest distance. Any path may be used for connection.

The first antenna element 312 and the second antenna element 313 are arranged to face each other so as to surround the region 301. The first antenna element 312 and the second antenna element 313 are three-dimensionally formed in the vertical direction with respect to the substrate 30.

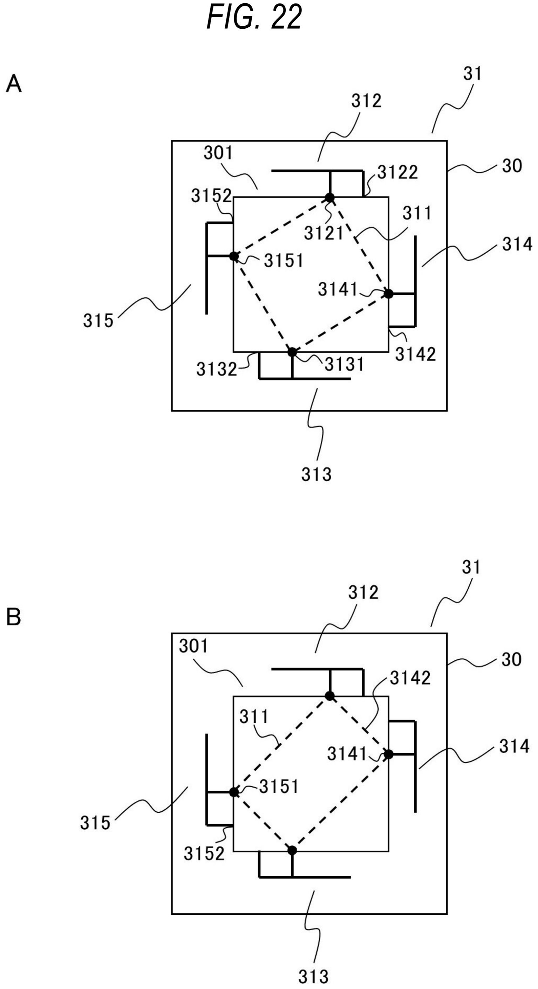

FIG. 22 is a diagram illustrating a configuration according to a second embodiment of the multi-antenna (third example).

A third antenna element 314 and a fourth antenna element 315 are inverted-F antennas. The connection line 311 connects the first feeding point 3121 of the first antenna element 312, the second feeding point 3131 of the second antenna element 313, a third feeding point 3141 of the third antenna element 314, and a fourth feeding point 3151 of the fourth antenna element 315.

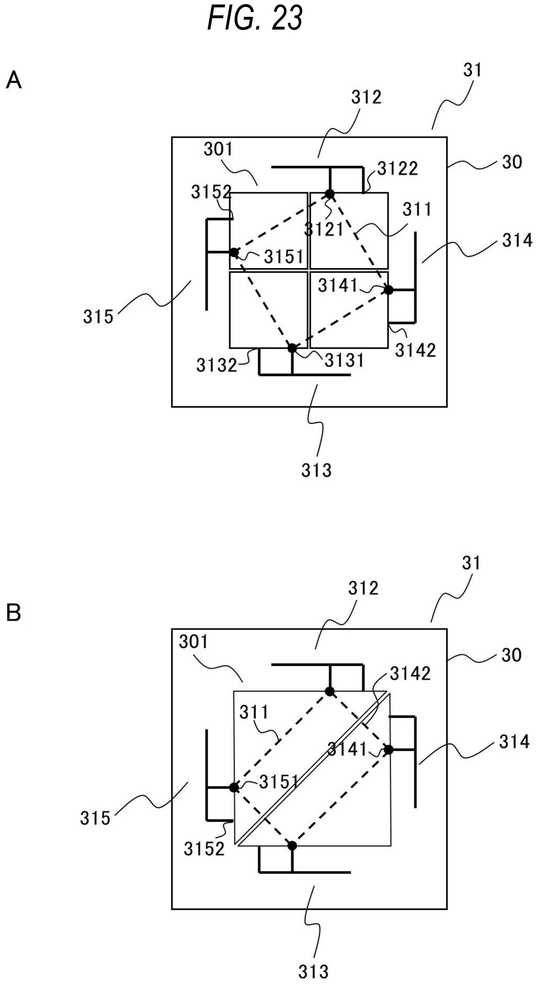

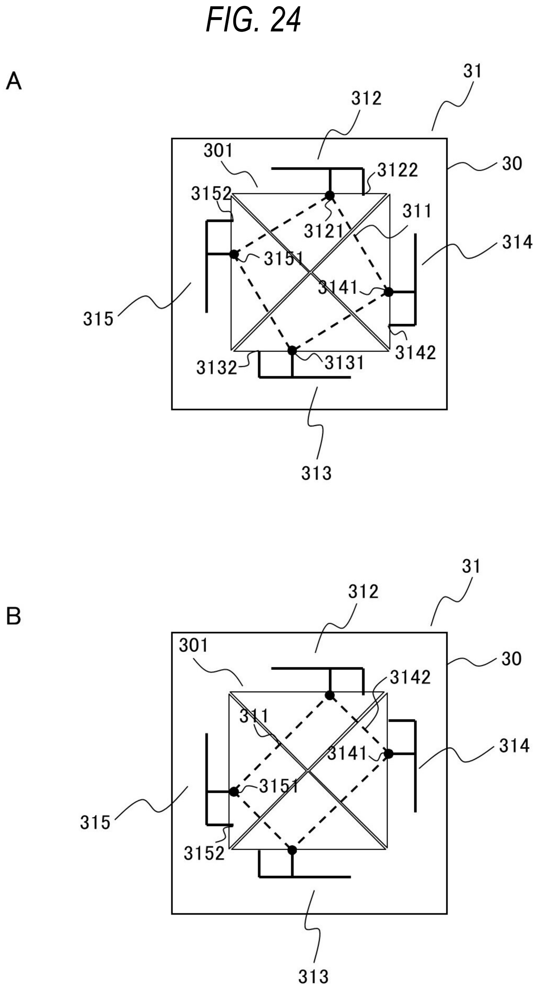

In the second embodiment of the multi-antenna (third example), the third antenna element 314 and the fourth antenna element 315, which are inverted-F antennas, are provided in addition to the first embodiment of the multi-antenna (third example). The connection line 311 is connected to the third feeding point 3141 of the third antenna element 314 and the fourth feeding point 3151 of the fourth antenna element 315. In addition, a third ground point 3142 of the third antenna element 314 and a fourth ground point 3152 of the fourth antenna element 315 are connected to the ground (substrate 31). The first ground point 3122, the second ground point 3132, the third ground point 3142, and the fourth ground point 3152 are not necessarily connected to a common ground, and may be connected to independent grounds. For example, each of the first ground point 3122, the second ground point 3132, the third ground point 3142, and the fourth ground point 3152 may be connected to a ground line divided independently into a plurality of regions (FIGS. 23 and 24).

The connection line 311 is wired so as not to be connected to the ground (substrate 31). The connection line 311 is not necessarily required to connect the first feeding point 3121, the second feeding point 3131, the third feeding point 3141, and the fourth feeding point 3151 at the shortest distance. In addition, the connection line 311 may be connected to the respective feeding points in any order. The connection line 311 may be connected to the first feeding point 3121, the second feeding point 3131, the third feeding point 3141, and the fourth feeding point 3151 via any path.

The third antenna element 314 and the fourth antenna element 315 are arranged to face each other so as to surround the region 301. In addition, the first antenna element 312, the second antenna element 313, the third antenna element 314, and the fourth antenna element 315 are arranged so as to surround the region 301. The first antenna element 312 and the second antenna element 313 are three-dimensionally formed in the vertical direction with respect to the substrate 30.

Accordingly, even when a receiving device is installed in an environment such as a metal conductor desk, a radio wave can be efficiently received by separating the multi-antenna from a conductor surface. In addition, it is possible to implement a multi-antenna that can reduce the thickness thereof, is compact and highly efficient, and has excellent reception performance.

Each of the first antenna element 312 to the fourth antenna element 315 is not necessarily provided at an end portion of the substrate 31 (substrate end), and may be provided in a region inside the end portion of the substrate 31 so as to surround the region 301.

In addition, the number of antenna elements is not limited to two or four. It is possible to implement a multi-antenna including antenna elements of any number of inverted-F antennas provided so as to surround the region 301.

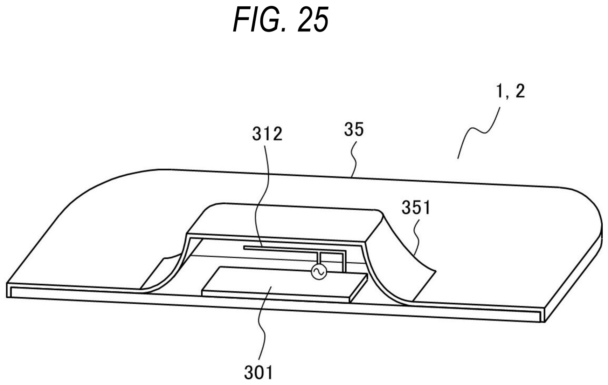

FIG. 25 is a side view of a main body of the power receiving device 1, 2 including the multi-antenna (third example).

A housing 35 is an exterior (case) surrounding the multi-antenna (third example). The housing 35 incorporates and accommodates the substrate 30 and the multi-antenna.

The housing 35 has a role of protecting the incorporated substrate 30 and a wireless device such as a multi-antenna. The housing 35 is formed by combining plastic (ABS resin) or a metal material having impact resistance and durability. In addition, a ventilation portion such as a ventilation hole or a ventilation slit for effectively diffusing internal heat to the outside may be provided.

The housing 35 is formed such that the thickness of the region 301 in the vertical direction is smaller than that in a planar direction of the region 301 of the multi-antenna, and may compactly accommodate the substrate 10 and the multi-antenna.

The housing 35 is formed in a protruding shape having an inclination in a vertical direction of the substrate from a periphery of the substrate toward a center of the substrate. Specifically, in the housing 35, the thickness of the region 301 in the vertical direction decreases from the center of the region 301 toward the circumferential direction of the region 301 because an inclined surface 351 is formed. Specifically, in the central region of the region 301, the incorporated inverted-F antenna (for example, first antenna element 312) protrudes from a region surface of the region 301 in the vertical direction, and therefore, accordingly, the housing 35 is also formed to protrude from the region surface of the region 301 toward the outside along the inclined surface 351.

Accordingly, since the thickness of the housing decreases in the circumferential direction of the receiving device, it is possible to implement a multi-antenna that is compact and highly efficient and has excellent reception performance.

<Configuration of Power Receiving Device (Stand)>

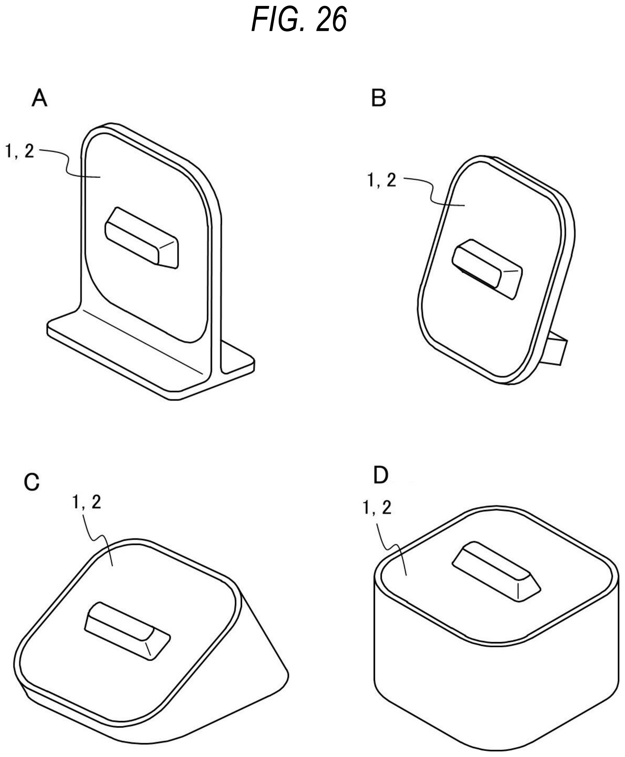

FIG. 26 is a perspective view of the power receiving device 1, 2 (fourth example).

The housing 35 includes a stand 352 configured to support the housing such that a direction orthogonal to a region intersects a placement surface when arranged. The housing 35 includes the stand 352 configured to support the housing such that a direction orthogonal to a region is substantially perpendicular to a placement surface when arranged. The stand 352 is formed of a plastic material or the like having durability and weather resistance.

Specifically, in A of FIG. 26, the housing 35 of the power receiving device 1, 2 is supported by the stand 352 capable of supporting, substantially perpendicularly to the placement surface, the substrate 30 incorporated in the housing 35 and the region 301. The stand 352 may be formed as a part of the housing 35 of the power receiving device 1, 2, or may be formed as a separate body. The housing 35 of the power receiving device 1, 2 may be formed to be detachable from the stand 352. In addition, the housing 35 of the power receiving device 1, 2 is not necessarily vertically supported, and as in B, C, and D of FIG. 26, the housing 35 may be supported at any angle as long as a part of the multi-antenna is a support member that may be arranged at least apart from the placement surface.

As illustrated in B and C of FIG. 26, it is preferable that the stand 352 supports the housing 35 of the power receiving device 1, 2 such that the region 301 of the multi-antenna is non-parallel (orthogonal) to the placement surface. The stand 352 may support the housing 35 in parallel to (facing) the placement surface as in D of FIG. 26 when the region 301 of the multi-antenna can take a sufficient distance to exhibit the performance of the multi-antenna.

Accordingly, even when a receiving device is installed in an environment such as a metal conductor desk, a radio wave can be efficiently received by separating the multi-antenna from a conductor surface. A receiving device capable of efficiently receiving a radio wave can be implemented.

The stand 352 may include a column part that supports the housing 35 capable of adjusting a height of the housing 35 (distance from placement surface of multi-antenna), an arm part having an articulated structure or a ball joint structure connected to the housing 35 capable of adjusting an angle of the housing 35 (angle with respect to placement surface of multi-antenna), and an attachment portion including a fixture such as a bracket or a clamp for connecting the arm part to the housing 35.

The multi-antenna incorporated in the housing 35 supported by the stand 352 is applicable to the multi-antennas according to all the examples of the present disclosure.

<Configuration of Power Receiving Device (Suspending Support Portion)>

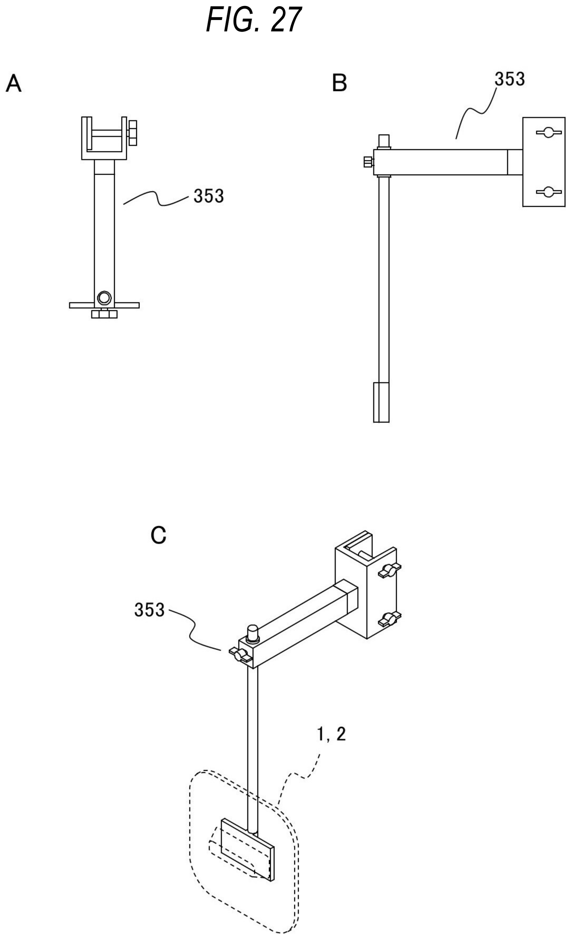

FIG. 27 is a top view, a side view, and a perspective view of a main body of the power receiving device 1, 2 (fifth example).

The housing 35 includes a suspending support portion 353 that may be suspended.

Specifically, the suspending support portion 353 is a support member configured to suspend and support the housing 35 at left and right ends of an electronic device such as a monitor arranged on a desk. For example, the housing 35 is fixed to arms (suspending support portions 353) fixed to left and right ends of an electronic device such as a monitor, and the housing 35 is supported apart from a metal desk. The suspending support portion 353 may include an adjustment member such as a wire, a chain, or a nylon strap capable of adjusting the distance to the housing 35. In addition, the suspending support portion 353 may support the housing 35 in a suspended manner by engaging an attachment hook with a suspension hook.

The multi-antenna incorporated in the housing 35 supported by the suspending support portion 353 is applicable to the multi-antennas according to all the examples of the present disclosure.

<Configuration of Multi-Antenna 41>

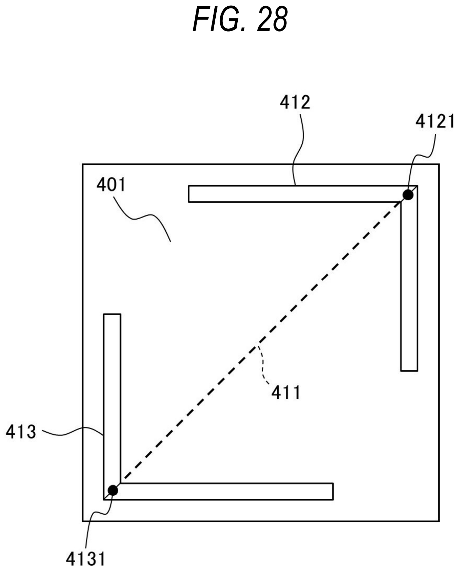

FIG. 28 is a diagram illustrating a configuration according to a first embodiment of a multi-antenna (sixth example).

A first antenna 412 and a second antenna 413 are formed as slits (gaps, slots) formed on a metal substrate. The slit formed on the metal substrate functions as an antenna element capable of receiving a radio wave.

In the first embodiment of the multi-antenna (sixth example), a gap and a slit, which are elongated gaps (slits), are formed on a conductor substrate made of a metal or the like. Specifically, a groove having a width of about several millimeters is provided on a conductor substrate. The slit extends in two different directions, similarly to the linear antennas in the multi-antenna (first example), the multi-antenna (second example), and the multi-antenna (third example). In addition, the extension direction of the slit of the first embodiment of the multi-antenna (sixth example) is allowed to be formed in any shape, similarly to the linear antennas of the multi-antenna (first example), the multi-antenna (second example), and the multi-antenna (third example).

In addition, a connection line 411 is provided so as to connect positions of apexes bent in an L shape. The connection line 411 is not necessarily provided at the position of the apex, and may be provided at a position offset from the position of the apex. In the present disclosure, radio wave energy received by the first antenna 412 and the second antenna 413 can be acquired from the connection line 411.

In the present disclosure, the number of slits is not limited to two. It is possible to implement a multi-antenna including antennas of any number of slits provided so as to surround the region 401.

In the first embodiment of the multi-antenna (sixth example), the slit provided in the conductor substrate may function as a magnetic current type antenna for receiving power. Accordingly, the power receiving device 1, 2 may be implemented.

Accordingly, it is possible to implement a multi-antenna having a small substrate area, low manufacturing cost, and excellent reception performance in the magnetic current type antenna.

<Interface Substrate (Seventh Example)>

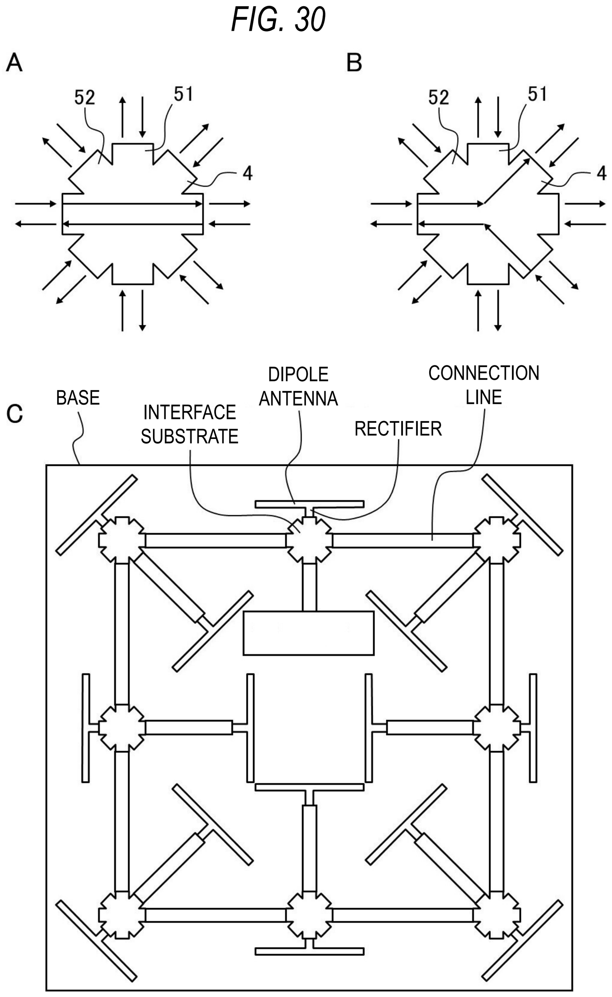

A and B of FIG. 30 are diagrams illustrating a configuration according to an interface substrate (seventh example).

C of FIG. 30 is a diagram illustrating an application example of the interface substrate to a multi-antenna including a plurality of linear antennas.

Referring to A and B of FIG. 30, an interface substrate (small substrate) 51 for assisting arrangement and connection of the linear antennas 1122, 1132, and 212 to 217, the connection line 111, 211, and the like included in the multi-antenna 11, 21 is exemplified.

A main body 52 of the interface substrate 51 has a polygonal shape as a model. In the present example, the main body 52 is formed based on a regular octagon. In the regular octagon, lengths of sides are all equal, interior angles are constant at 135 degrees, and a central angle is constant at 45 degrees.

The main body 52 of the interface substrate 51 is formed in a substantially regular polygonal shape, and a connector capable of connecting two terminals to each corner 54 of the main body may be arranged.

The interface substrate 51 facilitates application to each connection portion of the multi-antenna 11, 21 that may be geometrically symmetrical or fractal.

As exemplified in A and B of FIG. 30, the interface substrate 51 can form various flows of a current inside the main body 52 by using connectors arranged at a plurality of corners.

The interface substrate 51 exemplified in A and B of FIG. 30 can be used in combination with a linear antenna (dipole antenna) related to the multi-antenna 11, 21, a rectifier integrated with the linear antenna, and an FPC cable.

By using a plurality of interface substrates, multi-antennas of various forms can be implemented.

Referring to C of FIG. 30, an application example of the interface substrate 51 to a multi-antenna including a plurality of linear antennas is illustrated.

Each linear antenna has a rectifier at a center thereof and may be connected to a connector of the interface substrate at that position. The interface substrate may be connected to the FPC cable, a controller, or the like at a position of another connector.

The interface substrate has a switch mechanism therein, and can freely switch and select connection with the linear antenna, the FPC cable, and the controller.

The interface substrate 51 exemplified in A and B of FIG. 30 may be implemented by a switch such that the connection can be freely changed inside the main body 52.

As exemplified in A and B of FIG. 30, all the interface substrates 51 can have two inputs in the case of being connected to the respective antennas, and can have one input and one output in the case of only providing two output angles.

The multi-antenna may be reimplemented (reconfigurable) by controlling the switch in the interface substrate from the controller.

By using the interface substrate, it is possible to connect all patterns with only three types of substrate patterns (component mounting is switched each time). In this case, all the components can be mounted on one side as a flexible substrate. Therefore, this is advantageous in terms of design and manufacturing.

The use of the interface substrate 51 facilitates application to design changes of the multi-antenna.

Further, the use of the interface substrate 51 allows resistance to increase even when a strong load such as stress or heat is applied to the multi-antenna.

Further, the interface substrate 51 is joined with solder, a connector, a tape, or the like and housed in a housing, so that the interface substrate 51 can be easily melted into the environment.

The multi-antennas and the flexible substrates according to the present examples have been described above with reference to FIGS. 5 to 32.

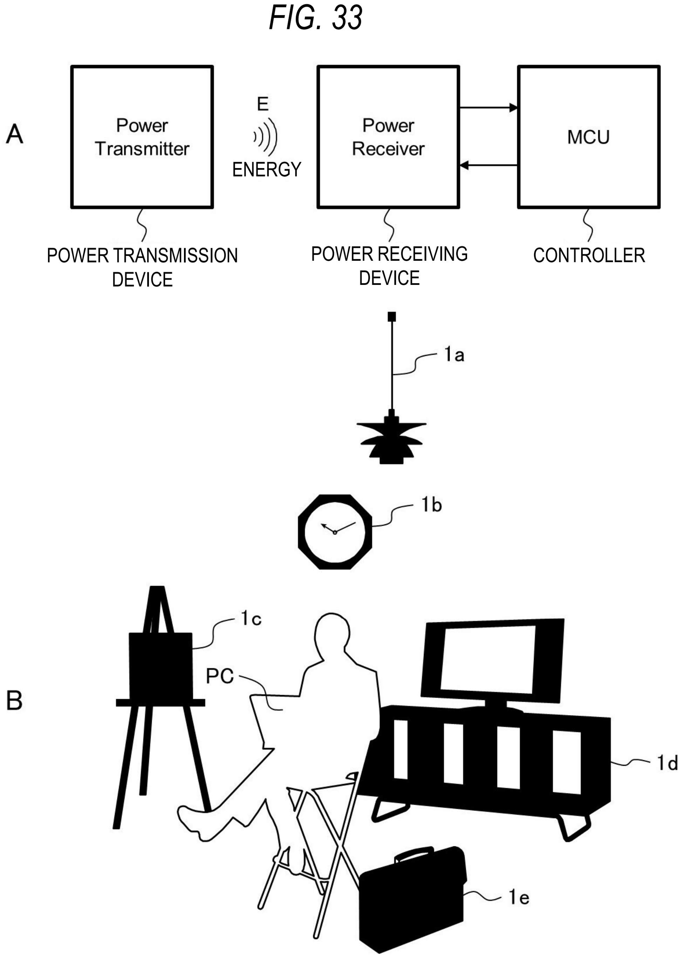

Next, the power receiving device 1 including the multi-antenna and the flexible substrate exemplified in FIGS. 5 to 19 will be described with reference to A and B of FIG. 33.

<Comparison Test of Various Multi-antennas>

Hereinafter, a comparison test of various multi-antennas in the related art performed by the present applicant will be described.

There are various types of methods for implementing a multi-antenna using a plurality of linear antennas.

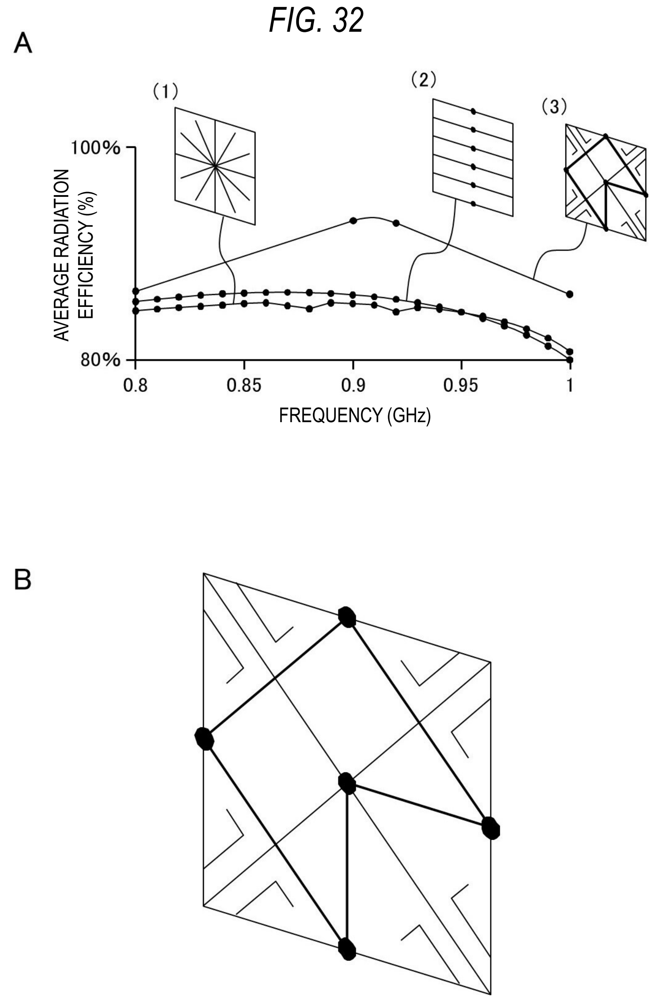

A of FIG. 32 is an example in which radiation efficiencies of various multi-antennas are indicated by (1) to (3).

B of FIG. 32 illustrates an example of a multi-antenna.

Referring to A of FIG. 32, configurations and radiation efficiencies of various multi-antennas are exemplified by (1) to (3).

In (1) to (3), a multi-antenna is implemented by combining six linear antennas in a square frame having a side of 12 cm.

In (1) of the drawing, a multi-antenna in which a plurality of linear antennas such as dipole antennas are radially arranged so as to intersect one another at a center point is exemplified. In this example, a total of six antennas are arranged such that two adjacent antennas form an angle of 30 degrees. In this case, since the antennas can be connected at the center point, the connection is easy.

In (2) of the drawing, a multi-antenna in which a plurality of linear antennas such as dipole antennas are arranged in parallel is exemplified. In this example, a total of six antennas are arranged such that two adjacent antennas are separated by a predetermined distance. The antennas may be connected in a meander shape bent in a zigzag manner.

In (3) of the drawing, six linear antennas such as dipole antennas are arranged more complicatedly than in the cases of (1) and (2). This example is devised by the present applicant.

As illustrated in an enlarged manner in B of FIG. 32, in the aspect (3), two linear antennas are arranged in a substantially cross shape at substantially a center on a substrate, and linear antennas are arranged along four sides of the quadrangle so as to surround the periphery thereof. Both ends of the outer linear antennas are folded inward twice at angles of 45 degrees and 90 degrees, respectively. The antennas can be connected relatively easily along the black connection line.

Referring to A of FIG. 32, the radiation efficiencies of the various multi-antennas (1), (2), and (3) are illustrated in comparison.

In view of a practical range, when compared within a frequency range of 0.8 GHz to 1.0 GHz, it is confirmed that the radiation efficiency of the multi-antenna of (3) is the highest, and for example, the radiation efficiency exceeds about 90% at a frequency of 0.92 GHz when the ideal performance of the antenna is set to 100%. On the other hand, it is confirmed that the radiation efficiency of both of the multi-antennas (1) and (2) is about 85% at the frequency of 0.92 GHz when the ideal performance of the antenna is set to 100%.

In this way, when a multi-antenna is implemented by combining a plurality of linear antennas, there are various configurations.

It is confirmed that power can be received with relatively high efficiency when a multi-antenna is arranged as exemplified in B of FIG. 32. In this case, the power reception efficiency may be further increased by further increasing the number of antennas.

However, there is a problem that the number of antennas is proportional to the substrate area (substrate cost increases as number of antennas increases). That is, a multi-antenna having a small component mounting area but having a large substrate area tends to have a high manufacturing cost.

In addition, in a case where a large number of linear antennas are densely arranged in a limited region, when interference or the like between adjacent antennas occurs, the power reception efficiency may be deteriorated.

Further, there is a trade-off relation between the amount of reception power of the multi-antenna (optimum arrangement of plurality of antennas in large area region) and the appearance (human being not aware of antenna).

In the present example, in view of the results of the above test, an improvement is made to reduce the manufacturing cost while preventing a decrease in the performance of the multi-antenna exemplified in (3). In particular, the present invention provides a multi-antenna in which a plurality of linear antennas are arranged close to one another in order to increase the spatial efficiency, and a circuit is arranged between the plurality of linear antennas so as to avoid or prevent the problem of electromagnetic coupling.

The term "multi-antenna" refers to an antenna in which a plurality of linear antennas (dipole antennas or the like) are arranged close to one another in order to increase the spatial efficiency.

In order to avoid or prevent the problem of electromagnetic coupling, the antennas may be connected by a connection line (such as DC connection line).

The term "power receiving device" refers to a device that receives energy wirelessly transmitted from a separate power transmission device in a three-dimensional space using an incorporated multi-antenna.

<Application Example of Power Receiving Device 1, 2>

As described above, in the present example, it is possible to wirelessly transmit energy to a PC, a sensor, an actuator, a robot, the device 13, 23, and the like using wireless power transfer (WPT). The embodiment can be implemented in various ways.

A of FIG. 33 is a diagram schematically illustrating an example in which a power receiving device is applied in a building management region.

B of FIG. 33 is a schematic diagram of a usage mode of the power receiving device.

Referring to A of FIG. 33, an application example of the power receiving device 1, 2 of WPT is schematically exemplified. As illustrated in the drawing, a power transmission device is provided outside the power receiving device 1, 2, and the power transmission device transmits energy E to the outside. The multi-antenna 11, 21 incorporated in the power receiving device 1, 2 is implemented to receive the energy E wirelessly transmitted from the outside. The power receiving device 1, 2 is connected to MCU (controller) in a wired manner, and can transmit data related to power reception to MCU. For example, the power receiving device may feed back the power reception amount to MCU.

Referring to B of FIG. 33, a schematic diagram of a usage form of the power receiving device 1, 2 is illustrated. As described above, the power receiving device 1, 2 including the multi-antenna 11, 21 implemented in a planar, curved, or three-dimensional manner can be used in various forms such as a desk mat and an object. In B of FIG. 33, an example of another form of the power receiving device 1 is schematically exemplified using reference numerals 1 and 2.

For example, the power receiving device 1, 2 may be implemented as a desk mat, a mouse pad, a table mat, a vinyl mat, or a protective mat. A place where the power receiving device 1, 2 is installed is, for example, an office desk, a table for dining, or an upper surface of a shelf. The power receiving device 1, 2 can receive transmission power from a power transmission device outside the desk, and can supply power to, for example, an electronic device such as a personal computer, a mouse, a smartphone, or a camera arranged on the power receiving device 1, 2 using the power. Power can be supplied from the power receiving device 1, 2 to the electronic devices wirelessly or by wire. By adopting such a configuration, it is possible to eliminate or reduce wiring on the power receiving device 1, 2.

Preferably, a main body of the power receiving device 1, 2 is formed in a multilayer shape and includes a front surface and a back surface. One of two opposite surfaces (for example, back surface) can be brought into contact with the front surface of the desk, and the other surface (for example, front surface) can be used as a work surface on the desk.

The power receiving device 1, 2 can be implemented such that both the front surface and the back surface can be used as work surfaces (reversible type). The front surface and the back surface may have the same color or the same material. Alternatively, the front surface and the back surface may have different colors or different materials. For example, each of the front surface and the back surface can be formed using a resin or the like.

A flexible printed circuit (FPC) 4 is sandwiched between the front surface and the back surface. The FPC can be provided with a printed wiring board (substrate). In particular, the FPC is provided with a multi-antenna capable of receiving energy wirelessly transmitted in a three-dimensional space.

In this way, the multi-antenna cannot be visually recognized from the outside. Therefore, the multi-antenna may be arranged without impairing the appearance of the surrounding environment.

For example, the power receiving device 1, 2 may be in the form of being suspended from a ceiling in a three-dimensional space. For example, the power receiving device 1, 2 may be arranged in the form of lighting suspended from the ceiling with a code, a chain, or the like. The multi-antenna may be arranged using a shade of illumination or a flat surface or a curved surface of an umbrella. The power receiving device 1, 2 may be in any form of being suspended from the ceiling, in addition to lighting.

For example, the power receiving device 1, 2 may be in the form of being attached to a wall of a room in a three-dimensional space. For example, the power receiving device 1, 2 may be arranged like a wall clock attached to a wall or a pillar with a nail or the like. A multi-antenna may be arranged using a face of the wall clock. The power receiving device 1, 2 may be in any form of being attached to a wall or a pillar in addition to a clock.

For example, the power receiving device 1, 2 may be in the form of standing or self-standing on a floor in a three-dimensional space. For example, the power receiving device 1, 2 may be arranged like a picture on an installation table such as a tripod provided on a floor, or a frame or a plate of a poster or the like. A multi-antenna may be arranged using a frame. The power receiving device 1, 2 may be in any form of self-standing on the floor in addition to a picture or a plate.

For example, the power receiving device 1, 2 may be in the form of being placed on a floor in a three-dimensional space. For example, the power receiving device 1, 2 may be arranged as a shelf or a desk. A multi-antenna may be arranged using at least one side surface of the shelf or the desk. The power receiving device 1, 2 may be in any form of being placed on a floor in addition to a shelf or a desk. For example, the power receiving device 1, 2 may be implemented such that a multi-antenna is arranged on a side surface of a sheet or an object placed on a desk.

For example, the power receiving device 1, 2 may be in the form of being movable in a three-dimensional space. For example, the power receiving device 1, 2 may be arranged on one side surface of a business bag or a handbag. For example, a multi-antenna may be arranged using a substantially rectangular back surface of a business bag or a handbag. The power receiving device 1, 2 may be in any form of being movable in addition to a bag. For example, the power receiving device 1, 2 may be implemented such that a multi-antenna is arranged on a side surface of a mobile phone.

Alternatively, the power receiving device 1, 2 may be arranged at four corners of the desk. In addition, the power receiving device 1, 2 may be arranged on a side surface, a ceiling, or a floor of a room in which a desk is installed.

As described above, the power receiving device 1, 2 can wirelessly transmit energy to a personal computer (PC), a sensor, an actuator, a robot, a device, or the like by using wireless power transfer (WPT).

In addition, a target of the power transmission may be a mobile phone, a personal digital assistant (PDA), a wireless microphone, a wireless USB, a wireless theater, a wireless television, a wireless camera, a wireless headphone, a wireless mouse, a wireless keyboard, a wireless router, a wireless printer, or the like.

The power receiving device 1, 2 can be connected to the targets by wire. Any type of power storage device or the like may be interposed therebetween. Further, the power receiving device 1, 2 may be integrated with the targets.

The power receiving device 1, 2 has a flexible main body formed in a sheet shape or any other shape, and the multi-antenna 11, 21 can be arranged on an FPC incorporated in the main body.

The flexible substrate can be freely bent or folded, and a circuit pattern can also be formed. The flexible substrate is also called a flexible printed circuit (FPC). In addition, there is also a flexible flat cable (FFC) in which components cannot be mounted but wiring can be performed.

In the present example, the multi-antenna 11, 21 are arranged on the substrate 10, 20, respectively, and are arranged on, for example, the flexible substrate 10, 20. The flexible substrate 10, 20 may include an FPC and an FFC.

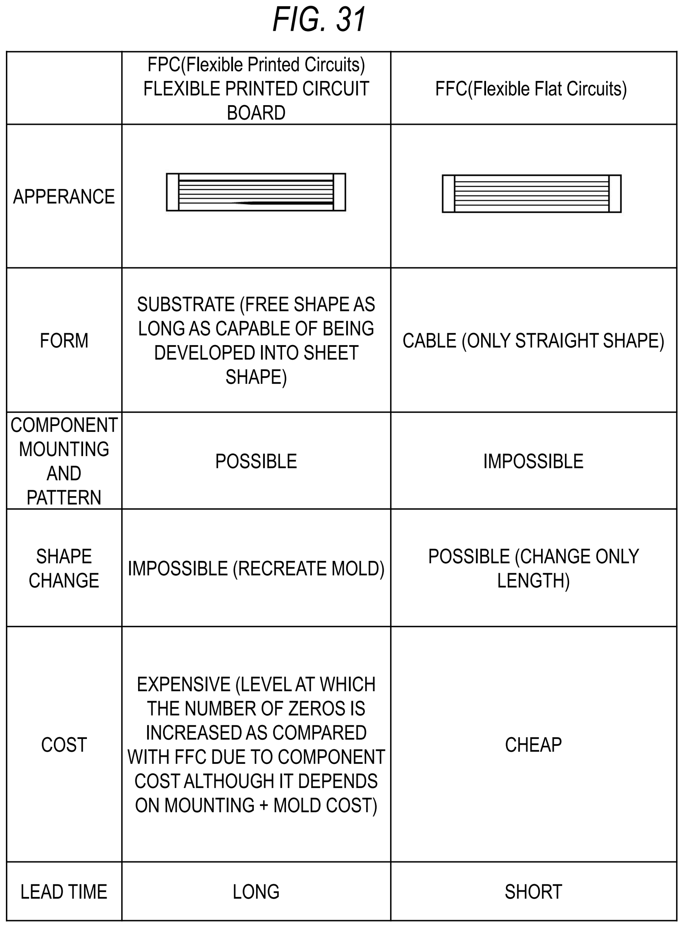

Referring to FIG. 31, the FPC and the FFC of the flexible substrate 10, 20 are shown in comparison with each other in terms of appearance, form, component mounting and pattern, shape change, cost, and lead time. As can be understood from this drawing, the FPC and the FFC each have advantages and disadvantages. In the present example, the FPC and the FFC can be used depending on the implementation environment.

In the present example, it should be understood that the shape, the size, the material, and the like of the substrate on which the multi-antenna 11, 21 is arranged may be freely selected.

In the main body or the housing of the power receiving device 1, 2, the FPC or the FFC can be attached via any means. For example, solder bonding, connector attachment, or copper foil tape bonding can be used for the attachment.

Solder bonding has an advantage of high mass productivity, but has a problem that the substrate may deteriorate due to heat during bonding.

Connector attachment has an advantage that reconfiguration is easy, but has a problem that the thickness is likely to increase because a connector is used.

Copper foil tape adhesion has an advantage that it is thin and heat is not applied, but has a problem in mass productivity.

In the present example, solder bonding, connector attachment, or copper foil tape bonding can be used depending on the implementation environment.

Although the multi-antennas according to the present examples have been described above with reference to the drawings, it should be understood that the present examples are not limited to the illustrated aspects.

For example, the multi-antennas according to the present examples can be combined with a cover called a radome that protects an antenna.

Further, the radome can increase the directivity of the antenna by installing a metal plate behind the antenna inside the radome to generate a reflected wave.

Alternatively, the multi-antennas according to the present examples may generate a reflection state by using a metal plate installed on a wall, a ceiling, or the like in a room.

In addition, although a dipole antenna has been described as a preferred example of the linear antenna in the above description, it should be understood that the present example is not limited thereto.

For example, a part or a plurality of the multi-antennas according to the present examples may be replaced or combined with another linear conductor such as a bow-tie dipole, a monopole antenna, or an inverted-F antenna.

Further, the multi-antennas according to the present examples do not necessarily have to be entirely formed of straight linear antennas. A part or a plurality of the multi-antennas according to the present examples may be replaced or combined with an arrangement such as a meander shape bent in a zigzag manner or a star shape extending radially from substantially one turn.

Further, a part or a plurality of the multi-antennas according to the present examples may be replaced or combined with an antenna using the concept of metamaterial. The metamaterial is an artificial medium in which regular structures of metals, dielectrics, and magnetic materials are periodically arranged to artificially create a characteristic physical phenomenon related to a wavelength of an electromagnetic wave.

In addition, it should be understood that the multi-antenna according to the present example can be added with any device or the like in order to improve a flow of a balanced current. For example, according to the embodiments, any device or the like that may be adopted in the antenna technique in the related art such as a blocking tube (Sperrtopf) or a balun (BALUN) can be added.

In addition, although the above description relates to reception of energy transmitted wirelessly in particular, the communication method is freely selected. For example, it should be understood that any communication method such as wireless LAN or Bluetooth (registered trademark) can be adopted.

The present invention is not limited to the examples described above, and includes various modifications. For example, the above-described examples have been described in detail for easy understanding of the present invention, and the present invention is not necessarily limited to those including all the configurations described above. In addition, a part of the configuration of one example may be replaced with the configuration of another example, and the configuration of one example may be added to the configuration of another example. In addition, a part of the configuration of each example may be added, deleted, or replaced with another configuration.

In addition, control lines and information lines that are considered to be necessary for the description are shown, and the control lines and information lines are not necessarily entirely shown in terms of a product. Actually, it may be considered that almost all configurations are connected to one another.

The above-described examples disclose at least the configurations described in the claims.

<Appendixes>

The matters described in the above embodiments will be appended below.

(Appendix 1)

A multi-antenna including: a substrate; a first antenna element (112) including two linear antennas extending in two different directions from a first feeding point, and a second antenna element (113) including two linear antennas extending in two different directions from a second feeding point, the first antenna element (112) and the second antenna element (113) being arranged to surround one region of the substrate; and a connection line (111) configured to connect the first feeding point of the first antenna element and the second feeding point of the second antenna element, in which the connection line (111) is connected to the first feeding point of the first antenna element without extending along a bisector of an interior angle formed by the two linear antennas with the first feeding point of the first antenna element as an apex, and the connection line (111) is connected to the second feeding point of the second antenna element without extending along a bisector of an interior angle formed by the two linear antennas with the second feeding point of the second antenna element as an apex.

Accordingly, it is possible to implement a multi-antenna having a small number of antennas, low manufacturing cost, and excellent reception performance.

(Appendix 2)

A multi-antenna including: a substrate; a first antenna element (112) including two linear antennas extending in two different directions from a first feeding point, and a second antenna element (113) including two linear antennas extending in two different directions from a second feeding point, the first antenna element (112) and the second antenna element (113) being arranged to surround one region of the substrate; and a connection line (111) configured to connect the first feeding point of the first antenna element and the second feeding point of the second antenna element, in which the first antenna element (112) extends in a first direction toward a first end and extends in a second direction toward a second end, the second antenna element (113) extends in a third direction toward a third end and extends in a fourth direction toward a fourth end, and an interior angle formed by the first direction and the second direction and an interior angle formed by the third direction and the fourth direction are less than 90 degrees.

Accordingly, it is possible to implement a multi-antenna having a small substrate area, low manufacturing cost, and excellent reception performance.

(Appendix 3)

The multi-antenna according to appendix 2, in which an interior angle formed by the two linear antennas with the first feeding point of the first antenna element (112) as an apex and an interior angle formed by the two linear antennas with the second feeding point of the second antenna element (113) as an apex are less than 90 degrees.

Accordingly, it is possible to implement a multi-antenna having a small substrate area, low manufacturing cost, and further excellent reception performance.

(Appendix 4)

The multi-antenna according to appendix 1, further including: a substrate; a first antenna element (112) including two linear antennas extending in two different directions from a first feeding point, and a second antenna element (113) including two linear antennas extending in two different directions from a second feeding point, the first antenna element (112) and the second antenna element (113) being arranged to surround one region of the substrate; and a connection line (111) configured to connect the first feeding point of the first antenna element and the second feeding point of the second antenna element, in which the first antenna element (112) extends in a first direction toward a first end and extends in a second direction toward a second end, the second antenna element (113) extends in a third direction toward a third end and extends in a fourth direction toward a fourth end, and an interior angle formed by the first direction and the second direction and an interior angle formed by the third direction and the fourth direction are 90 degrees or more.

Accordingly, the number of antennas is small, the manufacturing cost is low, and a radio wave can be received in a wide range. It is possible to implement a multi-antenna that is compact and highly efficient and has excellent reception performance.

(Appendix 5)

A multi-antenna including: a substrate; a first antenna element (112) including two linear antennas extending in two different directions from a first feeding point, and a second antenna element (113) including two linear antennas extending in two different directions from a second feeding point, the first antenna element (112) and the second antenna element (113) being arranged to surround one region of the substrate; and a connection line (111) configured to connect the first feeding point of the first antenna element (112) and the second feeding point of the second antenna element (113), in which the connection line (111) is bent and connected to the first feeding point of the first antenna element, and the connection line (111) is bent and connected to the second feeding point of the second antenna element.

Accordingly, the number of antennas is small, the manufacturing cost is low, and a radio wave can be received in a wide range. It is possible to implement a multi-antenna that is compact and highly efficient and has excellent reception performance.

(Appendix 6)

A multi-antenna including: a substrate; a first antenna element (112) having a first feeding point, and a second antenna element (113) having a second feeding point, the first antenna element (112) and the second antenna element (113) being arranged to surround one region of the substrate; and a connection line (111) configured to connect the first feeding point of the first antenna element and the second feeding point of the second antenna element, in which the first antenna element (112) and the second antenna element (113) are inverted-F antennas.

Accordingly, even when a receiving device is installed in an environment such as a metal conductor desk, a radio wave can be efficiently received by separating the multi-antenna from a conductor surface. In addition, it is possible to implement a multi-antenna that can reduce the thickness thereof, is compact and highly efficient, and has excellent reception performance.

(Appendix 7)

The multi-antenna according to appendix 6, further including: a substrate; a third antenna element (114) having a third feeding point, and a fourth antenna element (115) having a fourth feeding point, the third antenna element (114) and the fourth antenna element (115) being arranged to surround one region of the substrate, in which the third antenna element (114) and the fourth antenna element (115) are inverted-F antennas, and the connection line (111) connects the first feeding point of the first antenna element, the second feeding point of the second antenna element, the third feeding point of the third antenna element, and the fourth feeding point of the fourth antenna element.

Accordingly, even when a receiving device is installed in an environment such as a metal conductor desk, a radio wave can be efficiently received by separating the multi-antenna from a conductor surface. In addition, it is possible to implement a multi-antenna that can reduce the thickness thereof, is compact and highly efficient, and has excellent reception performance.

(Appendix 8)

The multi-antenna according to appendix 6, further including: a housing (35) surrounding the multi-antenna, in which the housing (35) is formed in a protruding shape having an inclination in a vertical direction of the substrate from a periphery of the substrate toward a center of the substrate.

Accordingly, even when a receiving device is installed in an environment such as a metal conductor desk, a radio wave can be efficiently received by separating the multi-antenna from a conductor surface. In addition, since the thickness decreases in the circumferential direction of the receiving device, it is possible to implement a multi-antenna that is compact and highly efficient and has excellent reception performance.

(Appendix 9)

A multi-antenna including: a substrate; a first antenna (112) having a first feeding point, and a second antenna (113) having a second feeding point, the first antenna (112) and the second antenna (113) being arranged to surround one region of the substrate; and a connection line (111) configured to connect the first feeding point of the first antenna and the second feeding point of the second antenna, in which the first antenna and the second antenna are formed as slits formed on a metal substrate.

Accordingly, it is possible to implement a multi-antenna having a small substrate area, low manufacturing cost, and excellent reception performance in the magnetic current type antenna.

(Appendix 10)

The multi-antenna according to any of appendixes 1 to 9, the multi-antenna being used for receiving energy transmitted from a power transmission device using a microwave in a power receiving device for wireless power transfer (WPT).

Accordingly, it is possible to implement a multi-antenna having a small number of antennas, low manufacturing cost, and excellent reception performance.

(Appendix 11)

A power receiving device for wireless power transfer (WPT), including: a substrate; a first antenna element (112) including two linear antennas extending in two different directions from a first feeding point, and a second antenna element (113) including two linear antennas extending in two different directions from a second feeding point, the first antenna element (112) and the second antenna element (113) being arranged to surround one region of the substrate; a connection line (111) configured to connect the first feeding point of the first antenna element and the second feeding point of the second antenna element; and a housing (35), in which the housing (35) includes a stand (352) configured to support the housing (35) such that a direction orthogonal to the region is separated from a placement surface by a predetermined distance or more when arranged.

Accordingly, even when a receiving device is installed in an environment such as a metal conductor desk, a radio wave can be efficiently received by separating the multi-antenna from a conductor surface. A receiving device capable of efficiently receiving a radio wave can be implemented.

(Appendix 12)

The power receiving device according to appendix 11, in which the housing (35) includes a stand (352) configured to support the housing (35) such that a direction orthogonal to the region intersects a placement surface when arranged.

Accordingly, even when a receiving device is installed in an environment such as a metal conductor desk, a radio wave can be efficiently received by separating the multi-antenna from a conductor surface. A receiving device capable of efficiently receiving a radio wave can be implemented.

(Appendix 13)

The power receiving device according to appendix 11, in which the housing (35) includes a stand (352) configured to support the housing (35) such that a direction orthogonal to the region is substantially vertical to a placement surface when arranged.

Accordingly, the multi-antenna can be arranged such that the receiving device is separated from an environment such as a metallic conductor desk. A receiving device capable of efficiently receiving a radio wave can be implemented.

REFERENCE SIGNS LIST

1 power receiving device
10 substrate
11 multi-antenna
12 circuit
13 device
2 power receiving device
20 substrate
21 multi-antenna
22 circuit
23 device
4 power transmission device

**Claims**

1. A multi-antenna comprising:

   a substrate;
   a first antenna element including two linear antennas extending in two different directions from a first feeding point, and a second antenna element including two linear antennas extending in two different directions from a second feeding point, the first antenna element and the second antenna element being arranged to surround one region of the substrate; and
   a connection line configured to connect the first feeding point of the first antenna element and the second feeding point of the second antenna element,
   wherein the connection line is connected to the first feeding point of the first antenna element so as not to extend along a bisector of an interior angle formed by the two linear antennas with the first feeding point of the first antenna element as an apex, and
   the connection line is connected to the second feeding point of the second antenna element so as not to extend along a bisector of an interior angle formed by the two linear antennas with the second feeding point of the second antenna element as an apex.

2. A multi-antenna comprising:

   a substrate;
   a first antenna element including two linear antennas extending in two different directions from a first feeding point, and a second antenna element including two linear antennas extending in two different directions from a second feeding point, the first antenna element and the second antenna element being arranged to surround one region of the substrate; and

   a connection line configured to connect the first feeding point of the first antenna element and the second feeding point of the second antenna element,
   wherein the first antenna element extends in a first direction toward a first end and extends in a second direction toward a second end,
   the second antenna element extends in a third direction toward a third end and extends in a fourth direction toward a fourth end, and
   an interior angle formed by the first direction and the second direction and an interior angle formed by the third direction and the fourth direction are less than 90 degrees.

3. The multi-antenna according to claim 2,
   wherein an interior angle formed by the two linear antennas with the first feeding point of the first antenna element as an apex and an interior angle formed by the two linear antennas with the second feeding point of the second antenna element as an apex are less than 90 degrees.

4. The multi-antenna according to claim 1, further comprising:

   a substrate;
   a first antenna element including two linear antennas extending in two different directions from a first feeding point, and a second antenna element including two linear antennas extending in two different directions from a second feeding point, the first antenna element and the second antenna element being arranged to surround one region of the substrate; and
   a connection line configured to connect the first feeding point of the first antenna element and the second feeding point of the second antenna element,
   wherein the first antenna element extends in a first direction toward a first end and extends in a second direction toward a second end,
   the second antenna element extends in a third direction toward a third end and extends in a fourth direction toward a fourth end, and
   an interior angle formed by the first direction and the second direction and an interior angle formed by the third direction and the fourth direction are 90 degrees or more.

5. A multi-antenna comprising:

   a substrate;
   a first antenna element including two linear antennas extending in two different directions from a first feeding point, and a second antenna element including two linear antennas extending in two different directions from a second feeding point, the first antenna element and the second antenna element being arranged to surround one region of the substrate; and

a connection line configured to connect the first feeding point of the first antenna element and the second feeding point of the second antenna element,

wherein the connection line is bent and connected to the first feeding point of the first antenna element, and

the connection line is bent and connected to the second feeding point of the second antenna element.

6. A multi-antenna comprising:

a substrate;

a first antenna element having a first feeding point, and a second antenna element having a second feeding point, the first antenna element and the second antenna element being arranged to surround one region of the substrate; and

a connection line configured to connect the first feeding point of the first antenna element and the second feeding point of the second antenna element,

wherein the first antenna element and the second antenna element are inverted-F antennas.

7. The multi-antenna according to claim 6, further comprising:

a substrate;

a third antenna element having a third feeding point, and a fourth antenna element having a fourth feeding point, the third antenna element and the fourth antenna element being arranged to surround one region of the substrate, wherein the third antenna element and the fourth antenna element are inverted-F antennas, and

the connection line connects the first feeding point of the first antenna element, the second feeding point of the second antenna element, the third feeding point of the third antenna element, and the fourth feeding point of the fourth antenna element.

8. The multi-antenna according to claim 6, further comprising:

a housing surrounding the multi-antenna, wherein

the housing is formed in a protruding shape having an inclination in a vertical direction of the substrate from a periphery of the substrate toward a center of the substrate.

9. A multi-antenna comprising:

a substrate;

a first antenna having a first feeding point, and a second antenna having a second feeding point, the first antenna and the second antenna being arranged to surround one region of the substrate; and

a connection line configured to connect the first feeding point of the first antenna and the second feeding point of the second antenna,

wherein the first antenna and the second antenna are formed as slits formed on a metal substrate.

10. The multi-antenna according to any of claims 1 to 9, wherein the multi-antenna is used for receiving energy transmitted from a power transmission device using a microwave in a power receiving device for wireless power transfer (WPT).

11. A power receiving device for wireless power transfer (WPT), the power receiving device comprising:

a substrate;

a first antenna element including two linear antennas extending in two different directions from a first feeding point, and a second antenna element including two linear antennas extending in two different directions from a second feeding point, the first antenna element and the second antenna element being arranged to surround one region of the substrate;

a connection line configured to connect the first feeding point of the first antenna element and the second feeding point of the second antenna element; and

a housing,

wherein the housing includes a stand configured to support the housing such that a direction orthogonal to the region is separated from a placement surface by a predetermined distance or more when arranged.

12. The power receiving device according to claim 11, wherein the housing includes a stand configured to support the housing such that a direction orthogonal to the region intersects the placement surface when arranged.

13. The power receiving device according to claim 11, wherein the housing includes a stand configured to support the housing such that a direction orthogonal to the region is substantially vertical to the placement surface when arranged.

14. The power receiving device according to claim 11, wherein the housing includes a suspending support

**EP 4 712 269 A1**

portion configured to suspend the housing.

## FIG. 1

*FIG. 2*

**POWER RECEIVING DEVICE** — 1, 2

- POWER STORAGE UNIT — 142
- POWER MANAGEMENT UNIT — 141
- MICRO-COMPUTER — 145
- RECTIFIER — 14
- MULTI-ANTENNA — 11, 21
- DATA TRANSMITTING AND RECEIVING DEVICE — 144
- DATA TRANSMITTING AND RECEIVING ANTENNA — 143

SENSOR

**POWER TRANSMISSION DEVICE** — 4

- TRANSMISSION ANTENNA — 402
- OSCILLATOR — 401
- DATA TRANSMITTING AND RECEIVING ANTENNA — 405
- DATA TRANSMITTING AND RECEIVING DEVICE — 404
- MICRO-COMPUTER — 403

# FIG. 3

A

1, 2

B

1, 2

FIG. 4

A

B

## FIG. 5

## FIG. 6

## FIG. 7

## FIG. 8

## FIG. 9

## FIG. 10

FIG. 11

FIG. 12

## FIG. 13

FIG. 14

## FIG. 15

FIG. 16

# FIG. 17

## FIG. 18

FIG. 19

FIG. 20

# FIG. 21

A

B

# FIG. 22

A

B

# FIG. 23

# FIG. 24

A

B

# FIG. 25

## FIG. 26

A

1, 2

B

1, 2

C

1, 2

D

1, 2

# FIG. 27

A

353

B

353

C

353

1, 2

# FIG. 28

# FIG. 29

ANTENNA

1122

1123

RECTIFIER

Vout

1132

111

RECTIFIER

1133

GND

# FIG. 30

A

52  51

4

B

52  51

4

C

BASE

INTERFACE
SUBSTRATE

DIPOLE
ANTENNA

RECTIFIER

CONNECTION
LINE

# FIG. 31

| | FPC(Flexible Printed Circuits) FLEXIBLE PRINTED CIRCUIT BOARD | FFC(Flexible Flat Circuits) |
|---|---|---|
| APPERANCE | | |
| FORM | SUBSTRATE (FREE SHAPE AS LONG AS CAPABLE OF BEING DEVELOPED INTO SHEET SHAPE) | CABLE (ONLY STRAIGHT SHAPE) |
| COMPONENT MOUNTING AND PATTERN | POSSIBLE | IMPOSSIBLE |
| SHAPE CHANGE | IMPOSSIBLE (RECREATE MOLD) | POSSIBLE (CHANGE ONLY LENGTH) |
| COST | EXPENSIVE (LEVEL AT WHICH THE NUMBER OF ZEROS IS INCREASED AS COMPARED WITH FFC DUE TO COMPONENT COST ALTHOUGH IT DEPENDS ON MOUNTING + MOLD COST) | CHEAP |
| LEAD TIME | LONG | SHORT |

# FIG. 32

A

B

# FIG. 33

A

Power Transmitter

E
)))
ENERGY

Power Receiver

MCU

POWER TRANSMISSION DEVICE

POWER RECEIVING DEVICE

CONTROLLER

1a

1b

B

1c

PC

1d

1e

## INTERNATIONAL SEARCH REPORT

| International application No. |
| --- |
| **PCT/JP2024/016926** |

| | | | |
| --- | --- | --- | --- |
| **A.** | **CLASSIFICATION OF SUBJECT MATTER** | | |

*H01Q 21/06*(2006.01)i; *H02J 50/20*(2016.01)i
FI: H01Q21/06; H02J50/20

According to International Patent Classification (IPC) or to both national classification and IPC

| | |
| --- | --- |
| **B.** | **FIELDS SEARCHED** |

Minimum documentation searched (classification system followed by classification symbols)

H01Q21/06; H02J50/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2012-191392 A (PANASONIC CORPORATION) 04 October 2012 (2012-10-04) | 1, 4 |
| | paragraphs [0015]-[0058], fig. 1-4 | |
| Y | | 10 |
| A | | 2-3, 5-9, 11-14 |
| X | JP 2017-228992 A (TOSHIBA TEC KABUSHIKI KAISHA) 28 December 2017 (2017-12-28) | 6-7 |
| | paragraphs [0015]-[0019], fig. 3 | |
| A | | 1-5, 8-14 |
| X | WO 2019/031270 A1 (YOKOWO CO., LTD.) 14 February 2019 (2019-02-14) | 9 |
| | paragraphs [0018]-[0026], fig. 1-7 | |
| A | | 1-8, 10-14 |
| Y | JP 2022-24292 A (SOFTBANK CORP.) 09 February 2022 (2022-02-09) | 10 |
| | paragraphs [0016]-[0033], fig. 1-4 | |
| A | | 1-9, 11-14 |

| | | |
| --- | --- | --- |
| ☑ Further documents are listed in the continuation of Box C. | | ☑ See patent family annex. |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **21 June 2024** | **16 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/016926**

| C. | DOCUMENTS CONSIDERED TO BE RELEVANT | | |
|---|---|---|
| Category* | Citation of document, with indication, where appropriate, of the relevant passages | Relevant to claim No. |
| A | JP 50-137455 A (YAGI ANTENNA CO., LTD.) 31 October 1975 (1975-10-31) | 1-14 |
| P, A | JP 7284550 B1 (AETERLINK CORP.) 31 May 2023 (2023-05-31) | 1-14 |

Form PCT/ISA/210 (second sheet) (July 2022)

**INTERNATIONAL SEARCH REPORT**
Information on patent family members

International application No.

**PCT/JP2024/016926**

| Patent document cited in search report | | | Publication date (day/month/year) | Patent family member(s) | | | Publication date (day/month/year) |
|---|---|---|---|---|---|---|---|
| JP | 2012-191392 | A | 04 October 2012 | (Family: none) | | | |
| JP | 2017-228992 | A | 28 December 2017 | US fig. 3 EP CN | 2017/0373373 3264524 107546466 | A1 A1 A | |
| WO | 2019/031270 | A1 | 14 February 2019 | US fig. 1-7 EP CN | 2020/0067181 3667819 110574233 | A1 A1 A | |
| JP | 2022-24292 | A | 09 February 2022 | (Family: none) | | | |
| JP | 50-137455 | A | 31 October 1975 | (Family: none) | | | |
| JP | 7284550 | B1 | 31 May 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010041566 A

- WO 2018096740 A